# EUROPEAN PATENT SPECIFICATION

(11) **EP 1 912 220 B1**
(45) Date of publication and mention of the grant of the patent: **23.02.2011**
(21) Application number: 07118190.3
(22) Date of filing: 10.10.2007
(51) Int. Cl.: G11B 27/34, G11B 27/32

(54) **Recording medium, authoring method, and optical disc manufacturing method**
Aufzeichnungsmedium, Autorenmethode und Herstellungsverfahren für optische Discs
Support d'enregistrement, procédé d'autorisation et procédé de fabrication de disques optiques

(30) Priority: 11.10.2006 JP 2006277368
(43) Date of publication of application: 16.04.2008
(73) Proprietor: Sony Corporation, Minato-ku Tokyo 108-0075 (JP)
(72) Inventor: Uchimura, Kouichi, Minato-ku (JP); Fujii, So, Minato-ku (JP)
(74) Representative: Melzer, Wolfgang

(56) References cited:
- EP-A- 1 605 701
- EP-A- 1 638 327
- EP-A- 1 641 259
- US-A1- 2005 155 058

## Description

### CROSS REFERENCES TO RELATED APPLICATIONS

The present invention contains subject matter related to Japanese Patent Application JP 2006-277368 filed in the Japanese Patent Office on October 11, 2006.

### BACKGROUND OF THE INVENTION

The present invention relates to a a recording medium, an authoring method, and a disc manufacturing method that are configured to enhance the interactive ease of operation by users for handling content recorded on mass recording media, such as a Bluray Disc for example.

Recently, the Blu-ray Disc (trademark) standard has been put into practice as a standard for recordable and removable disc recording media. In the Blu-ray Disc standard, a maximum recording capacity of 27GB (Gigabytes) is achieved by use of a disc of 12cm in diameter and 0.1mm in cover layer and an optical system based on a blue-violet laser of 405nm wavelength and an object lens of 0.85 numerical aperture. This standard allows the recording of longer than two hours of Japanese BS (Broadcasting Satellite) digital high-definition broadcast without involving deteriorated image quality.

Sources of AV (Audio/Visual) signals to be recorded to this recordable optical disc are supposed to include the source of analog signals to be transmitted by analog television broadcasting for example and the source of digital signals to be transmitted by digital television broadcasting, such as BS digital broadcasting for example. With the Blu-ray Disc standard; a standard specifying a method of recording the AV signals based on these types of broadcasting has already been provided.

On the other hand, for standards derived from the current Blu-ray Disc standard, activities for developing reproduction-only recording media recorded with movie or music in advance are going on. For disc recording media configured to record movie and music, the DVD (Digital Versatile Disc) standard has already been popularized. However, this reproduction-only optical disc based on the Blu-ray Disc standard is significantly different from the existing DVDs in the point that high-definition video can be recorded for longer than two hours while maintaining high-quality image, supported by the mass storage and high-speed transfer rate realized by the Blu-ray Disc technology. Thus, the above-mentioned reproduction-only optical disc is said to be advantageous over the existing DVDs.

Today, it is a general practice, in recording content, such as movies, to discs and marketing the content as package media, that a user interface for controlling the execution of various programs involved in the reproduction of content is recorded to each disc along with the content. A typical user interface is a menu-driven display screen. For example, in menu display, a button for selecting a function is arranged in the form of a button image; the user presses this button through a predetermined input means to execute the function allocated to this button.

The button is generally in one of the three states; the selected state in which the button is selected, the execution state in which the execution of a predetermined function is specified with a corresponding command associated, and the normal state in which neither the selected state nor the execution is selected. For example, by operating a cross key arranged on a remote control commander for a music player, a button displayed on a screen is selected and an enter key arranged on the remote control commander is pressed to shift the button state from the selected state to the execution state, for example, thereby executing the command associated with this button, which in turn executes the predetermined function.

This button capability allows the realization of various functions, such as the operation of a scene select menu, the selection of subtitles, the switching on/off of subtitles, and the switching of languages, for example, without interrupting the reproduction of movie data.

Japanese Patent Laid-open No. 2004-304767 discloses a technology for realizing the displaying of menu screens by use of the above-mentioned button image in Blu-ray Disc recording media.

It should be noted that a stream in which the data necessary for the menu display of a button, for example, is mainly stored in a sub stream associated with the movie data to be reproduced. It is practicable to associate two or more sub streams to one piece of movie data.

Commands are arranged in notation as separated from each other with predetermined delimiters to be executed in a specified sequence. Conditional branching may also be used as required. For example, in one command sequence, a second command written after a first command is executed after the first command in time. Each command has several limitations in order to avoid conflict between different commands or solve functional problems, for example. In the case of commands associated with the button in menu display, there is a limitation that any commands written after the commands shown below are not executed, for example.
(a) A command for changing reproduction positions.
(b) A command for switching a sub stream currently executing menu display to another sub stream.
(c) A command for turning off a popup menu.
(d) A command for default button setting and page switching.

With the above-mentioned commands (a), (b) and (c), it is possible for the stream itself in which these commands are stored after execution to be switched to another, so that any commands that follow these three types of commands are not executed.

It should be noted that a popup menu may be controlled in turning on/off (display/not display) by operating a predetermined key on the remote control commander, for example.

Further, menu display can be configured by use of two or more pages. The command of (d) above can switch between pages by specifying them and, at the same time, define a button in a selected state as default on a specified page. Generally, switching between pages causes the switching between menu items, therefore any commands following the command (d) are not executed.

In addition, the button can be defined so as to automatically shift from the selected state to the execution state. The button thus defined is referred to as an auto action button. For example, if an operation is made through the remote control commander so as to shift the status of the auto action button from the normal state to the selected state, this button is automatically shifted to the execution state upon shifting to the selected state, the command associated with this button being executed. It should be noted that the definition of the auto action button only causes the button automatically from the selected state to the execution state, so that any button that is defined as an auto action button must be associated with a command for exiting the execution state.

However, the above-mentioned related-art technologies present a problem that, because commands associated with a button are imposed with restrictions as described above, these commands cannot realize certain types of actions that are supposed for use relatively frequently.

For example, it is difficult for the related-art technologies to realize a useful and simple action of displaying a popup menu for executing chapter skip and, after selecting and skipping to a desired chapter, turning off this popup menu.

Namely, in this case, because of the above-mentioned limitation "(a) any command following the reproduction position change command will not be executed", merely arranging commands in a sequence of popup menu turn-on, select scene and move, and popup menu turn-off will not cause the last popup menu turn-off command to be executed, the popup menu left displayed also after a scene skip.

To circumvent this problem, use of a hidden button may be proposed, for example. A hidden button is not displayed on screen but can be defined in three states and, at the same time, associated with a command. A hidden button can be realized by setting the opacity to the lowest level for the button image for displaying a button and making the background all transparent, for example.

For example, a command for putting a hidden button defined as an auto action button into a selected state is associated with a button in a popup menu. This allows the automatic execution of the command associated with the hidden button when that button in the popup menu is shifted to an execution state. Consequently, the popup menu may be turned off upon a scene skip.

For example, it may be considered that a register usable by the producer side in a player is used, a scene skip is executed by one conditional branch operation by use of a conditional branch command based on a flag, flag values are replaced, and a command for turning off the popup menu by a second conditional branch operation is associated with the hidden button.

However, as described above, the button defined as an auto action button must exit the execution state by use of some command after the transition from the selected state to the execution state, so that the above-mentioned method cannot realize an expected operation. Namely, a command for exiting the execution state must be written after a scene skip command, but the above-mentioned restriction prevents this exiting command from being executed. Hence, that command is not executed, thereby causing a hung-up state with the hidden button in the execution state, for example.

### SUMMARY OF THE INVENTION

It is an object of the present invention to provide a recording medium, an authoring method, and a disc manufacturing method with which, if the first command is a command for changing reproduction positions and the second command is command for turning off a popup menu, an application for turning off a popup menu after changing reproduction positions can be realized.

With the present invention, when the first button is put in an execution state, the second button is put in a selected state. Then, the second button is automatically put in an execution state, upon which the third button is put in a selected state and the first command associated with the second button is executed. The third button is automatically put from a selected state into an execution state, upon which the second command is executed. Then the second command can be executed after the first command.

### BRIEF DESCRIPTION OF THE DRAWINGS

FIG. 1 is a schematic diagram illustrating a BD-ROM data model;
FIG. 2 is a schematic diagram illustrating an index table;
FIG. 3 is a UML diagram illustrating a relationship between a clip AV stream, clip information, a clip, a play item, and a play list;
FIG. 4 is a schematic diagram illustrating a method of referencing a same clip from a plurality of play lists;
FIG. 5 is a schematic diagram illustrating a sub path;
FIG. 6 is a schematic diagram illustrating a management structure in which files to be recorded to recording media are managed;
FIGS. 7A and 7B are flowchart schematically indicative of an operation of a BD virtual player;
FIG. 8 is a schematic diagram approximately illustrating an operation of the BD virtual player;
FIG. 9 is a schematic diagram illustrating an exemplary plane structure that is used as a display system of images practiced as one embodiment of the invention;
FIG. 10 is a block diagram illustrating an exemplary configuration of composing a movie plane, a subtitle plane, and graphics plane;
FIG. 11 is a schematic diagram illustrating an exemplary palette table that is stored in a palette;
FIGS. 12A through 12D are schematic diagrams illustrating an exemplary button image storage format;
FIG. 13 is an exemplary status transition diagram illustrating the displaying of a button on a graphics plane;
FIGS. 14A through 14F are schematic diagrams approximately illustrating a configuration of a menu screen and button;
FIG. 15 is a schematic diagram illustrating a syntax indicative of an exemplary structure of ICS header information;
FIG. 16 is a schematic diagram illustrating a syntax indicative of an exemplary structure of block interactive_composition_data_fragment();
FIG. 17 is a schematic diagram illustrating a syntax indicative of an exemplary structure of block page();
FIG. 18 is a schematic diagram illustrating a syntax indicative of an exemplary structure of block button_overlap_group();
FIG. 19 is a schematic diagram illustrating an exemplary structure of block button();
FIG. 20 is a block diagram illustrating an exemplary decoder model of interactive graphics;
FIG. 21 is a schematic diagram indicative of an exemplary menu display screen to be displayed by an IG stream;
FIG. 22 is a schematic diagram illustrating how movie data reproduced by a play item of a main path is displayed on a movie plane;
FIG. 23 is a schematic diagram illustrating an exemplary display screen obtained by composing a menu screen and movie data to be reproduced by a play item of a main path and displayed on a movie plane;
FIG. 24 is a schematic diagram illustrating an example in which an enter key is pressed to display a pulldown menu;
FIG. 25 is a schematic diagram illustrating an example in which a pulldown menu is displayed by an operation specifying downward with a cross key for example;
FIG. 26 is another schematic diagram illustrating an example in which a pulldown menu is displayed by an operation specifying downward with a cross key for example;
FIGS. 27A and 27B are schematic diagrams illustrating properties of command EnableButton() and DisableButton();
FIG. 28 is a schematic diagram illustrating menu display control according to one embodiment of the invention;
FIG. 29 is a flowchart indicative of one example of processing of menu display control according to one embodiment of the invention;
FIGS. 30A, 30B, and 30C are schematic diagrams illustrating menu display control according to one embodiment of the invention;
FIGS. 31A and 31B are schematic diagrams illustrating menu display control according to one embodiment of the invention;
FIG. 32 is a block diagram illustrating an exemplary configuration of a reproducing apparatus applicable to one embodiment of the invention;
FIG. 33 is a schematic diagram illustrating one example of disc manufacturing processes; and
FIG. 34 is a block diagram illustrating an exemplary configuration of a software manufacturing processing block.

### DETAILED DESCRIPTION OF THE PREFERRED EMBODIMENTS

This invention will be described in further detail by way of embodiments thereof with reference to the accompanying drawings. First, for the ease of understanding, the following describes a management structure of content, namely AV (Audio/Video) data, recorded to a BD-ROM that is a read-only Blu-ray Disc defined by "Blue-ray Disc Read-Only Format Ver 1.0 Part 3 Audio Visual Specifications" with respect to Blu-ray Disc media. In what follows, this management structure in the BD-ROM is referred to as a BDMV format.

For example, a bit stream obtained by encoding data by an encoding algorithm, such as MPEG (Moving Pictures Experts Group) or MPEG Audio, and multiplexing the encoded data by the MPEG2 system is referred to as a clip AV stream (or an AV stream). A clip AV stream is recorded to a disc as a file by a file system defined in "Blu-ray Disc Read-Only Format Part 2", one of the standards associated with Blu-ray Disc. This file is referred to as a clip AV stream file (or an AV stream file).

A clip.AV stream file is a unit of management in file system, so that this not always a management unit easy to be understood by the user. In terms of user convenience, it is necessary to record, to a disc as a database, a mechanism of integrating video content divided into two or more clip AV stream files into one file for reproduction, a mechanism of reproducing only a part of a clip AV stream file, and information for smoothing executing special reproduction and cue reproduction. This database is specified by "Blu-ray Disc Read-Only Format Part 3", one of the Blu-ray Disc standards.

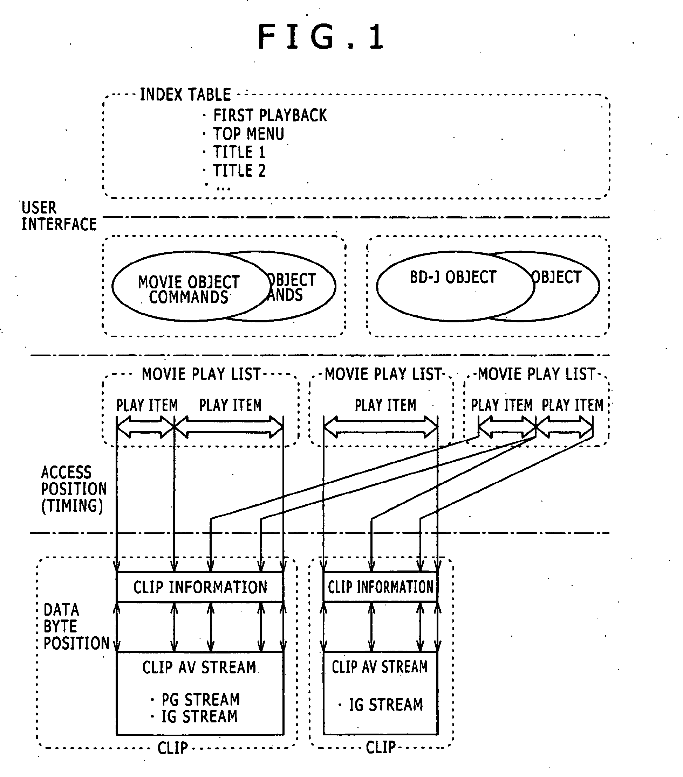

Now, referring to FIG. 1, there is schematically shown a data model of BD-ROM. The data structure of BD-ROM is made up of four layers as shown. On the bottom layer, clip AV streams are arranged (therefore, the bottom layer is also referred to as the clip layer for convenience). The layer above the clip layer has a movie play list and a play item for specifying the position of reproduction in a clip AV stream (this layer is also referred to as play list layer for convenience). The layer above the play list layer has movie objects made up of commands for specifying a reproduction sequence in the movie play list (this layer is also referred to as an object layer for convenience). On the top layer, an index table for managing titles stored in this BD-ROM is stored is arranged (this layer is also referred to as an index layer for convenience).

The following describes the clip layer. A clip AV stream is a bit stream with video data or audio data multiplexed with an MPEG2 TS (Transport Stream) format, for example. The information about this clip AV stream is recorded to the file as clip information.

A clip AV steam is also multiplexed with a stream for displaying subtitles and menus to be displayed along with content data based on video data and audio data. A graphics stream for subtitle display is referred to as a presentation graphics (PG) stream. The menu display data made into a stream is referred to as an interactive graphics (IG) stream.

A clip AV stream file and a clip information file containing the clip information corresponding to the clip AV stream file are regarded as one object, which is referred to as a clip. Namely, a clip is one object made up of a clip AV stream and clip information.

A file is generally handled as a sequence of bytes. The content of a clip AV stream file is expanded along the time axis and the entry point in a clip is mainly specified by time base. If a time stamp of an access point to a predetermined clip is given, the clip information file can be used to find the information of an address at which data reading is to be started in a clip AV stream file.

The following describes the play list layer. A movie play list is made up of the specification of an AV stream file to be reproduced and a collection of a reproduction start point (or an in-point) and a reproduction end point (or an out-point) that specify a reproduction position of the specified AV stream file. A pair of these start and end points is referred to as a play item. Each movie play list is made up of a collection of play items. The reproduction of a play item denotes the reproduction of a part of an AV stream file that is referenced by that play item. Namely, on the basis of the in-point and the out-point in each play item, a corresponding section in the clip is reproduced.

The following describes the object layer. Each movie object includes terminal information that links an HDMV navigation command program (or an HDMV program) with a movie object. The HDMV program is a command for controlling the reproduction of a play list. The terminal information includes the information for enabling the user to execute an interactive operation on a user's BD-ROM player. On the basis of this terminal information, user operations, such as menu screen call and subtitle search, are controlled.

Each BD-J object is made up of an object based on a Java (trademark) program. Because the BD-J object is not much associated with the present invention, detail description of the BD-J object will be omitted.

The following describes the index layer. The index layer is made up of an index table. The index table is a top-level table that defines the title of each BD-ROM disc. On the basis of the title information stored in the index table, the reproduction of the BD-ROM disc is controlled by a module manager in the BD-ROM resident system software.

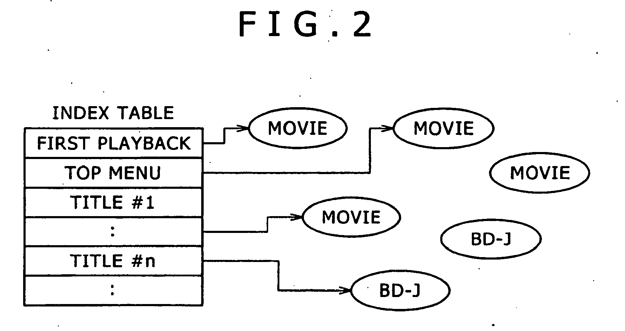

To be more specific, as schematically shown in FIG. 2, a given entry in the index table is referred to as a title; each of the first playback, top menu, and title #1, title #2 and so that are entered in the index table is a title. Each of the titles is indicative of a link to a movie object or a BD-J object and each title is indicative of either an HDMV title or a BD-J title.

For example, in the content to be stored in the BD-ROM concerned is a movie, the first playback is an advertisement video (or a trailer) by a movie company that is shown before the main story. If the content is a movie, the top menu is a menu screen for allowing the user to select the reproduction of main story, chapter search, subtitle and language setting, and promotion video, for example. Also, the title is each video that is selected through the top menu. It is also practicable that a title provides a menu screen.

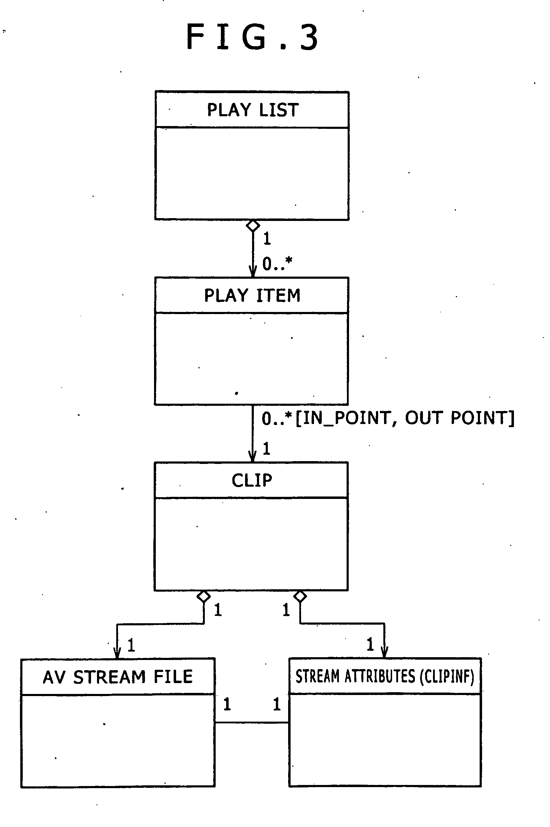

FIG. 3 is a UML (Unified Modeling Language) diagram illustrating a relationship between the above-described clip AV stream, clip information (stream attribute), clip, play item, and play list. The play list is related with one or more play items. Each play item is related with one clip. One clip can be related with two or more play items having different start points and/or end points. One clip references one clip AV stream. Likewise, one clip references one clip information file. The clip AV stream file and the clip information file have a one-to-one relationship. Defining the above-mentioned structure allows the specification of a non-destructive reproduction sequence for the reproduction of only a desired portion without changing clip AV stream files.

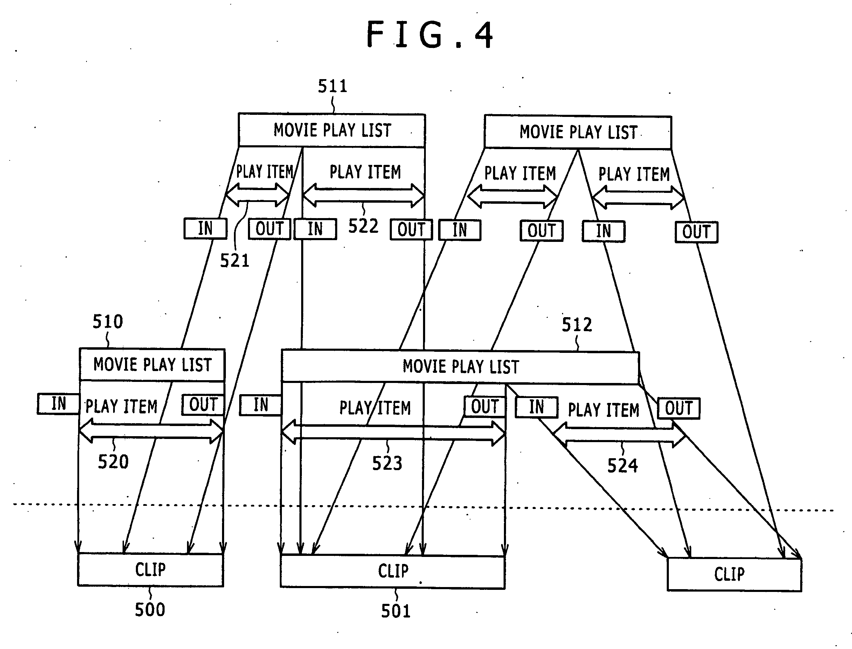

Also, as shown in FIG. 4, two or more play lists can reference one same clip. One play list can specify two or more clips. Each clip is referenced by the in-point and out-point indicated by each play item in the play list. In the example shown in FIG. 4, a clip 500 is referenced from a play item 520 of a play list 510 and, at the same time, a section defined by the in-point and the out-point is referenced from a play item 521 of a play list 511 made up of the play item 521 and the play item 522. Also, with a clip 501, a section defined by the in-point and the out-point is referenced from the play item 522 of the play list 511 and, at the same time, a section defined by the in-point and the out-point of a play item 523 of a play list 512 made up of the play item 523 and a play item 524 is referenced.

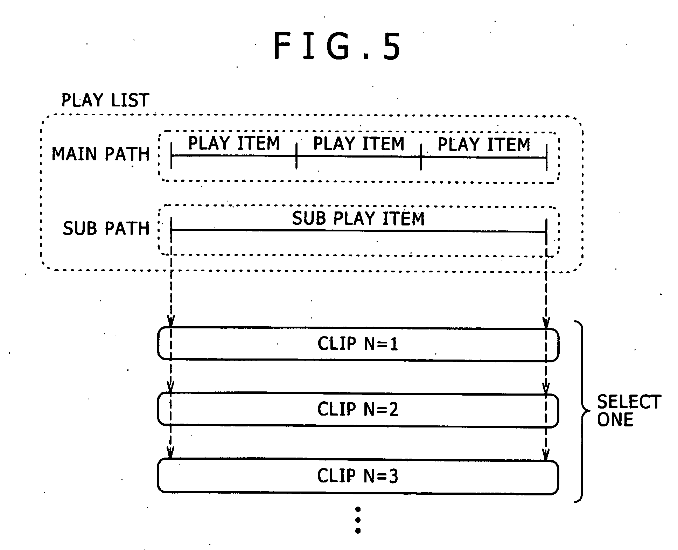

It should be noted that, as shown in FIG. 5 by way of example, each play list can have a sub path corresponding to a sub play item relative to a main path mainly corresponding to a play item to be reproduced. Each sub play item can be related with two or more different clips and selectively reference one of the two or more related clips. Each play list can have a sub play item only if a predetermined condition is satisfied, details of which will be omitted.

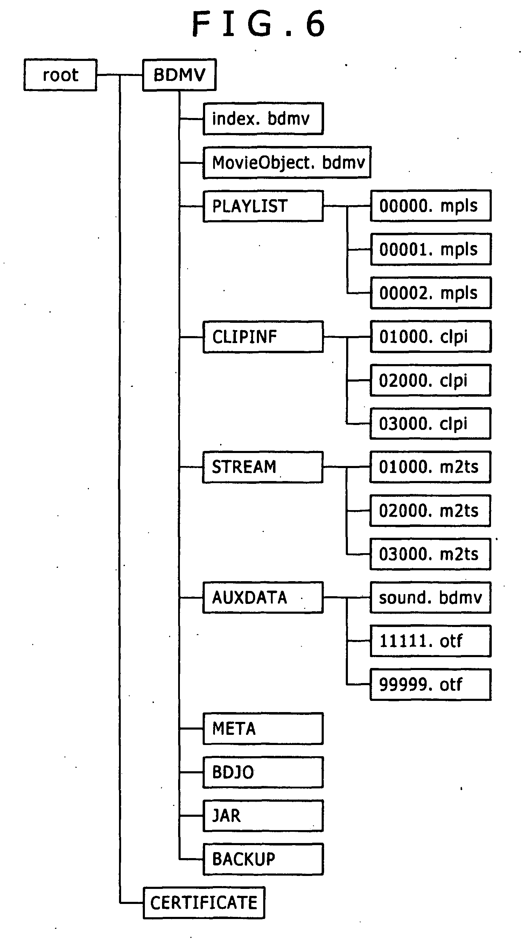

The following describes the management structure of a file to be recorded to the BD-ROM specified by "Blu-ray Disc Read-Only Format Part 3" with reference to FIG. 6. Files are hierarchically managed by a directory structure. On each recording media, one directory (a root directory in the example shown in FIG. 6) is created first. A range below the root direction is managed by one recording/reproducing system.

Below the root directory, directory "BDMF" and directory "CERTIFICATE" are arranged. In directory "CERTIFICATE", the information about copyright is stored. In directory "BDMV", the data structure described with reference to FIG. 1 is stored.

Just below directory "BDMV", only two files, file "index.bdmv" and file "MovieObject.bdmv" can be arranged. Arranged below directory "BDMV" are directory "PLAYLIST", directory "CLIPINF", directory "STREAM", directory "AUXDATA", directory "META", directory "BDJO", directory "JAR", and directory "BACKUP".

File "index.bdmv" describes the contents of directory "BDMV". Namely, this file "index.bdmv" corresponds to the index table in the above-mentioned index layer that is the top layer. File "MovieObject.bdmv" stores the information about one or more movie objects. Namely, this file "MovieObject.bdmv" corresponds to the above-mentioned object layer.

Directory "PLAYLIST" is a directory in which a play list database is arranged. Namely, directory "PLAYLIST" includes file "xxxxx.mpls" that is a file associated with a movie play list. File "xxxxx.mpls" is a file that is created for each movie play list. In this file name, "xxxxx" is indicative of a 5-digit number and "mpls" is an extension fixed to the file of this type.

Directory "CLIPINF" is a directory in which a clip database is arranged. Namely, directory "CLIPINF" includes file "zzzzz.clpi" that is clip information file for each clip AV stream file. In this file name, "zzzzz" is indicative of a 5-digit number and "clpi" is an extension fixed to the file of this type.

Directory "STREAM" is a directory in which an AV stream file as a substance is arranged. Namely, directory "STREAM" includes a clip AV stream file corresponding to each clip information file. Each clip AV stream file is made up of a transport stream file of MPEG2 (hereafter referred to as MPEG2 TS) and has a file name "zzzzz.m2ts". In the file name, "zzzzz" is the same as that of the corresponding clip information file, so that the relationship between the clip information file and this clip AV stream file can be easily known.

Directory "AUXDATA" is a directory in which a sound file, a font file, a font index file, and a bitmap file for use in menu display are arranged. File "sound.bdmv" stores the sound data associated with an application of an interactive graphics stream of HDMV. The file name is fixed to "sound.bdmv". File "aaaaa.otf" stores font data for use in subtitle display and the above-mentioned BD-J application. In the file name, "aaaaa" is indicative of a 5-digit number and "otf" is an extension fixed to the file of this type. File "bdmv.fontindex" is a font index file.

Directory "META" stores a meta data file. Directory "BDJO" and directory "JAR" store files associated with the above-mentioned BD-J object. Directory "BACKUP" stores the backup files of the above-mentioned directories and files. These directories "META", "BDJO", "JAR", and "BACKUP" are not directly associated with the present invention, so that details thereof will be omitted.

When a disc having the above-mentioned data structure is loaded on a player, the player must convert a command written to a movie object read from the loaded disc into a command unique to controlling the internal hardware of the player. The player has the software necessary for this conversion in the ROM (Read Only Memory) incorporated in the player. This software is referred to as a BD virtual player because this software controls the player to execute operations compliant with the BD-ROM standard through the intermediation of disc and player.

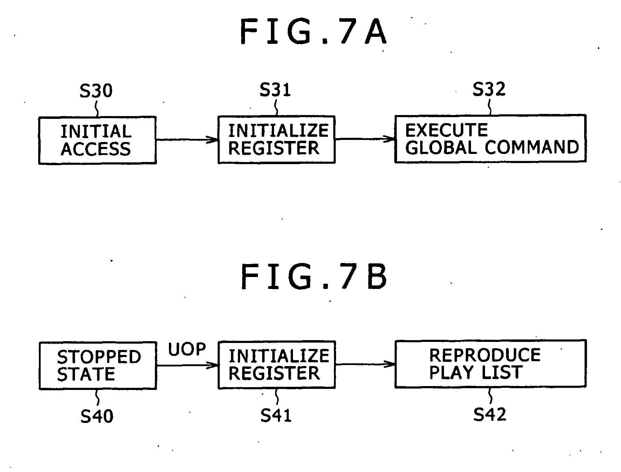

FIGS. 7A and 7B schematically show an operation of this BD virtual player. FIG. 7A shows an exemplary disc loading operation. When the disc is loaded on the player and is initially accessed (step S30), a register for storing parameters to be shared in the disc is initialized (step S31). In step S32, a program is read from the disc and executed. It should be noted that the initial access denotes the reproduction of the disc for the first time after loading.

FIG. 7B shows an exemplary operation to be executed when the reproduction is specified by the user by pressing the play key for example when the player is in the stopped state. In the first stop state (step S40), the user specifies the reproduction through a remote control commander for example. In the figure, "UP" denotes a user operation.. When the reproduction is specified, the register or common parameters are initialized (step S41). In step S42, the procedure goes to a play list reproduction phase. It should be noted that it is also practicable to have a configuration in which the register is not initialized or reset.

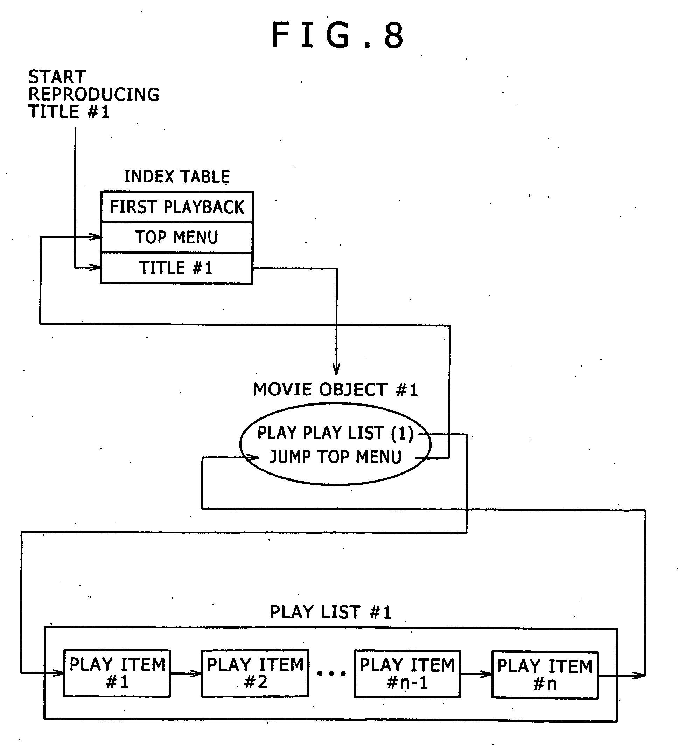

The following describes the reproduction of a play list in the execution phase of a movie object with reference to FIG. 8. The following description uses the case in which the start of reproducing content having title number #1 is specified by a user operation for example. In response to the content reproduction start specification, the player references the index table shown in FIG. 2 to obtain the number of an object corresponding to the content reproduction of title #1. For example, if the number of the object corresponding to the content reproduction of title #1 is #1, then the player starts executing movie object #1.

In the example shown in FIG. 8, the program written to movie object #1 is made up of two lines. If the command on line 1 is "Play PlayList(1)", then the player starts reproducing play list #1. Play list #1 is made up of one or more play items, which are sequentially reproduced. When the play items in play list #1 have all been reproduced, the play list returns to the execution of movie object #1, executing the command on line 2. In the example shown in FIG. 8, the command on line 2 is "jump TopMenu". When this command is executed, the execution of a movie object for realizing the top menu written to the index table starts

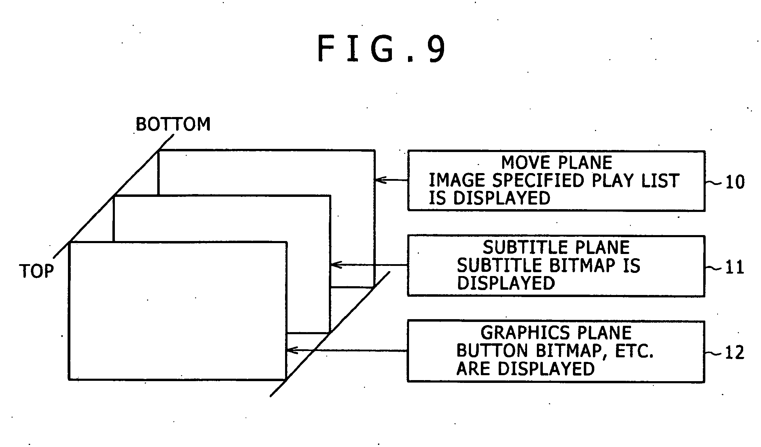

The following describes an image display system practiced as one embodiment of the invention. In this embodiment, the image display system has a plane structure as shown in FIG. 9. A movie plane 10 is displayed in the bottom as shown, on which an image (mainly movie data) specified by the play list is handled. A subtitle plane 11 is displayed over the movie plane 10 and handles the subtitle data to be displayed during the reproduction of movie. A graphics plane 12 is displayed in the top and handles character data for displaying a menu screen and graphics data such as bitmap data for displaying a button image. One display screen is displayed as an integration of these three planes.

It should be noted that the data for displaying a menu screen is handled on the graphics plane 12 as described above, so that the graphics plane 12 will also be referred to as an interactive graphics plane 12.

The movie plane 10, the subtitle plane 11, and the interactive graphics plane 12 can be individually displayed. The movie plane 10 has a resolution of 1920 pixels × 1080 line, a data length of 16 bits per pixel, and a ratio of luminance signal Y and chrominance signals Cb and Cr being 4 to 2 to (hereafter referred to as YCbCr(4:2:2)). It should be noted that YCbCr(4:2:2) is a color system in which luminance signal Y per pixel is 8 bits, each of chrominance signals Cb and Cr per pixel is 8 bits, and one piece of color data is made up of two horizontal pixels of chrominance signals Cb and Cr. The interactive graphics plane 12 and the subtitle plane 11 each have a resolution of 1920 pixels × 1080 lines, a sampling depth of each pixel of 8 bits, and a color system based on an 8-bit color map address using a pallet of 256 colors.

The interactive graphics plane 12 and the subtitle plane 11 are capable of alpha blending of 256 steps and setting opacity in 256 steps in the integration with other planes. The opacity setting can be executed for each pixel. The following assume that opacity α is expressed in a range of (0 ≤ α ≤ 1), where α = 0 is indicative of full transparency and α = 1 is indicative of full opacity.

The subtitle plane 11 handles image data of PNG (Portable Network Graphics) type for examples. The interactive graphics plane 12 can also handle image data of PNG Type for example. The PNG type can attach alpha channel, namely, opacity information (called alpha data) of each pixel component if the sampling depth of one pixel is 1 to 16 bits and the.sampling depth is 8 bits or 16 bits. If the sampling depth is 8 bits, opacity can be specified in 256 steps. Alpha blending is executed by use of the opacity information based on this alpha channel. In addition, pallet images of up to 256 colors can be used and each element (or index) of a prepared-pallet is represented by index number.

It should be noted that the image data to be handled on the subtitle plane 11 and the interactive graphics plane 12 is not limited to PNG type. The subtitle plane 11 and the interactive graphics plane 12 can be configured to handle the image data compressed by another compression algorithm such as JPEG, the image data compressed by run-length compression, or the bitmap data.

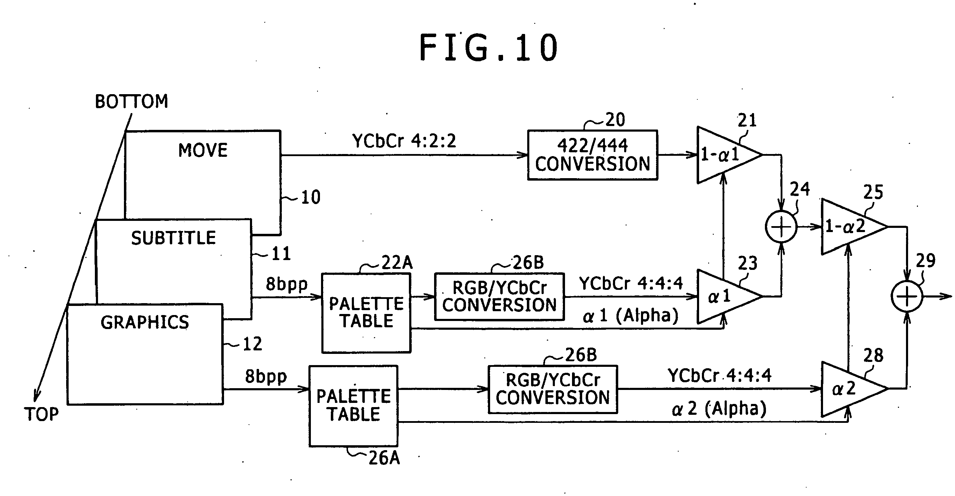

FIG. 10 shows an exemplary configuration of a graphics processing block configured to integrate the three planes in accordance with the plane structure shown in FIG. 9. It should be noted that the configuration shown in FIG. 10 can be implemented by either hardware or software. The movie data of the movie plane 10 is supplied to a 422/444 converter 20. The color system of the movie data is converted by the 422/444 converter 20 from YCbCr(4:2:2) to YCbCr(4:4:4) and the converted movie data is entered in a multiplier 21.

The image data of the subtitle plane 11 is entered in a palette 22A to be outputted therefrom as the image data of RGB(4:4:4). If the opacity by alpha blending is specified for this image data, specified opacity α1 (0 ≤ α1 ≤ 1) is outputted from the pallet 22A.

For the pallet 22A, the pallet information corresponding to a file of PNG type for example is stored as a table. For the pallet 22A, the index number is referenced with the entered 8-bit image data as an address. On the basis of this index number, RGB (4:4:4) data each consisting of 8 bits are outputted. At the same time, on the pallet 22A, alpha channel data α indicative of opacity is taken out.

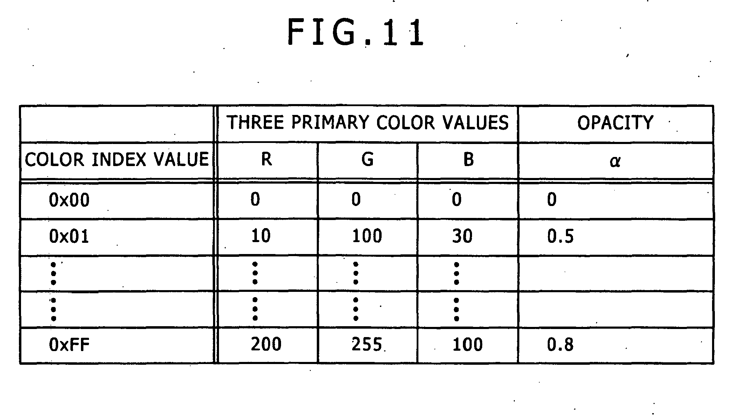

FIG. 11 shows an exemplary palette table that is stored in the palette 22A. To each of 256 color index values 0x00 to 0xFF (0x is indicative of hexadecimal), three primary colors R, G, and B each represented by 8 bits and opacity α are allocated. For the palette 22A, the palette table is referenced on the basis of the entered image data of PNG type and the R, G, and B color data (RGB data) each made up of 8 bits and opacity α are outputted for each pixel.

The RGB data outputted from the palette 22A is supplied to an RGB/YCbCr converter 22B to be converted into data of luminance signal Y and chrominance signals Cb and Cr each being 8 bits (hereafter collectively referred to as YCbCr data). This is because the subsequent integration of planes must be made with a common data format. Therefore, YCbCr data that is the data format of movie data is used.

The YCbCr data outputted from the RGB/YCbCr converter 22B and opaque data α1 are entered into a multiplier 23. The multiplier 23 multiplies the entered YCbCr data by opacity data α1. A result of the multiplication is entered in one input terminal of an adder 24. It should be noted that the multiplier 23 multiplies each of luminance signal Y and chrominance signals Cb and Cr in the YCbCr data by opacity data α1. At the same time, the complement (1 - α1) of opacity data α1 is supplied to the multiplier 21.

The multiplier 21 multiplies the movie data entered from the 422/444 converter 20 by the complement (1 - α1) of opacity data α1. A result of the multiplication is entered in the other input terminal of the adder 24. The adder 24 adds the multiplication results obtained in the multiplier 21 and the multiplier 23. Consequently, the movie plane 10 and the subtitle plane 11 are integrated. A result of the adder 24 is supplied to a multiplier 25.

The image data of the interactive graphics plane 12 is entered in a palette 26A to be outputted as the image data of RGB (4:4:4). If the opacity based on alpha blending is specified for this image data, the specified opacity α2 (0 ≤ α2 ≤ 1) is outputted from the palette 26A. The RGB data outputted from the palette 26A is supplied to an RGB/YCbCr converter 26B to be converted into YCbCr data to be integrated with the YCcCr data that is the data format of movie data. The YCbCr data outputted from the RGB/YCbCr converter 26B is entered in a multiplier 27.

If the image data to be used by the interactive graphics plane 12 is of PNG type, then opacity data α2 (0 ≤ α2 ≤ 1) can be set for each pixel to the image data. Opacity data α2 is supplied to the multiplier 27. The multiplier 27 multiplies the YCbCr data entered from the RGB/YCbCr converter 26B by opacity data α2 for the of luminance signal Y and chrominance signals Cb and Cr. A result of the multiplication by the multiplier 27 is entered in one input terminal of an adder 28. At the same time, the complement (1 - α2) of opacity data α2 is supplied to the multiplier 25.

The multiplier 25 multiplies the result of the adding by the adder 24 by the complement (1 - α2). A result of this multiplication is entered in the other input terminal of the adder 28 to be added to the result of the multiplication by the multiplier 27. Consequently, the interactive graphics plane 12 is further integrated with the integration result between the movie plane 10 and the subtitle plane 11.

In the subtitle plane 11 and the interactive graphics plane 12, setting opacity α = 0 of an area having no image to be displayed, for example, can transparently display the plane under that plane and display the movie data displayed on the movie plane 10 for example as the background of the subtitle plane 11 and the interactive graphics plane 12.

The following describes an interactive graphics stream (or an IG stream). Especially, the following describes those parts of an IG stream which are closely associated with the present invention. An IG stream is obtained by making the data for use in menu display into a stream as described above. For example, a button image for use in menu display is stored in an IG stream.

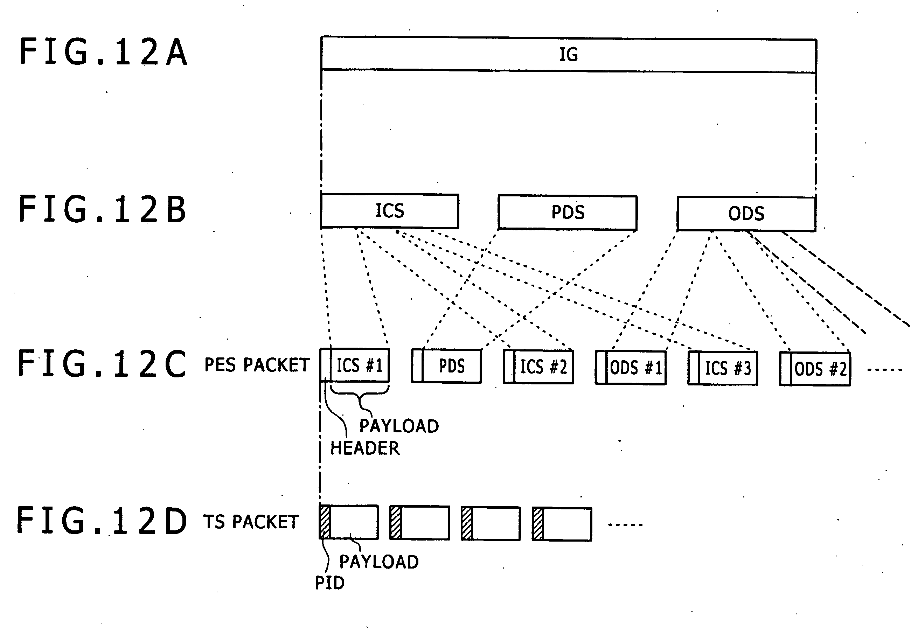

An IG stream is multiplexed with a clip AV stream. As shown in FIG. 12B, an interactive graphics stream (FIG. 12A) is made up of three types of segments, ICS (Interactive Composition Segment), PDS (Palette Definition Segment), and ODS (Object Definition Segment) as shown in FIG. 12B.

Of these three types of segments, ICS holds the basic structure of IG (Interactive Graphics), details of which will be described later. PDS holds the color information of an button image. ODS holds the shape of a button. To be more specific, ODS contains a button image itself, the bitmap data representative of a button image, for example, as compressed by a predetermined data compression algorithm such as run-length compression.

AS shown in FIG. 12C by way of example, ICS, PDS, and ODS are each divided into a predetermined portions as required to be identified by PID (Packet Identification) to be stored in the payload of a PES (Packetized Elementary Stream) packet. The size of the PES packet is fixed to 64KB (Kilo Bytes), so that ICS and ODS that are relatively large in size are divided into predetermined portions to be packed into the payload of the PES packet. On the other hand, PDS is often less than 64KB in size, so that PDS for one IG can be stored in one PES packet. For each PES packet, the information indicative which of ICS, PDS, and ODS is the data stored in the payload and the identification information indicative of the sequence for each packet are stored in PID.

Each PES packet is further divided into predetermined portions to be packed into transport packets based on MPEG TS (Transport Stream) (refer to FIG. 12D). The sequence for each transport packet and the information for identifying the data stored in each transport packet are stored in PID.

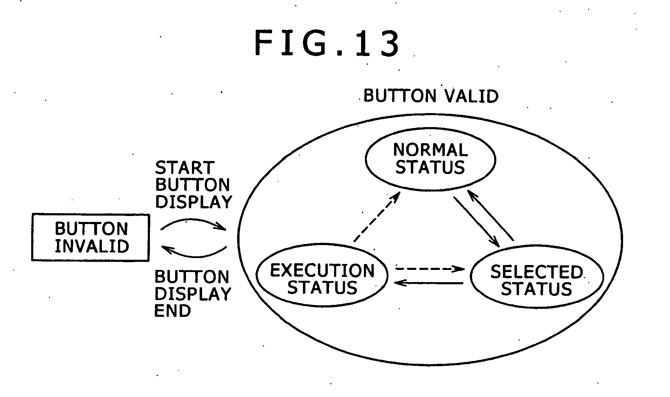

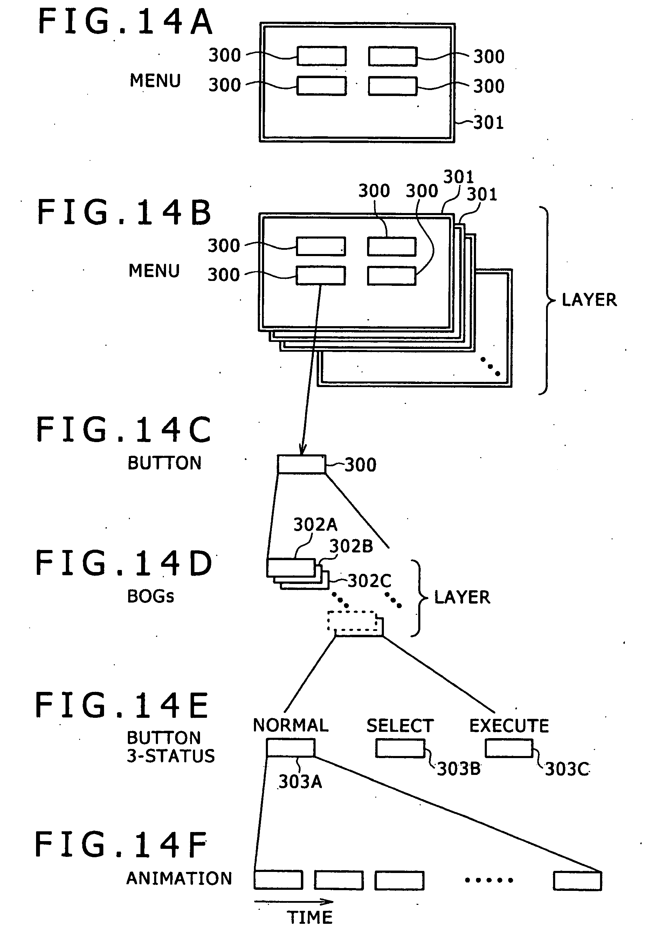

The following describes ICS that is contained in a display set of interactive graphics. Before describing ICS, the configurations of a menu screen and a button are schematically shown with reference to FIGS. 13 and 14. It should be noted that the display set is a set of data for executing menu display. A display set of IG stream is made up of the above-mentioned ICS, PDS, and ODS.

FIG. 13 is a transition diagram, one example of button display to be shown on the interactive graphics plane 12. A button is largely in one of an invalid state and a valid state. In the invalid state, the button is not displayed on a screen. In valid state, the button is displayed on a screen. When the state shifts from the invalid state to the valid state, button display starts. When the states shifts from the valid state to the invalid state, button display ends. The button valid states is in one of three states; a normal state, a selected state, and an execution state. The button can shift between these three states. It is also practicable to make transition unidirectional. Further, it is practicable to define an animation for each of these three button states.

FIGS. 14A through 14F schematically illustrate configurations of a menu screen and buttons. It is assumed a menu screen 301 has two or more buttons 300, 300, and so on as shown in FIG. 14A by way of example. This menu screen 301 can be hierarchically configured with two or more menu screens as shown in FIG. 14B. The menu screen on each layer is referred to as a page. For example, when the button 300 shown on the top menu screen is shifted from the selected state to the execution state through predetermined input means, a configuration may be considered in which the menu screen at the bottom of that menu screen comes to the top. It should be noted that the changing of button states through predetermined input means is hereafter expressed as the operation of a button, for the brevity of description.

One button 300 shown on the menu screen 301 can be configured as hierarchically made up of two or more buttons 302A, 302B, and so on (refer to FIGS. 14C and 14D). In other words, two or more buttons can be selectively shown at one button display position. For example, this configuration is preferable, if, when a predetermined one of buttons has been operated, the functions and display of other buttons shown at the same time are changed, because the menu screen itself need not be rewritten. A set of buttons selectively shown on one button display position is referred to as a BOG (Button Overlap Group).

Each of buttons making up GOG can have three states, a normal state, a selected state, and an execution state. Namely, as shown in FIG. 14E, each of the buttons making up BOG can be allocated with buttons 303A, 303B, and 303C indicative of a normal state, a selected state, and an execution state, respectively. Further, each of these buttons 303A, 303B, and 303C can be set with animation display as shown in FIG. 14F. In this case, the button to which animation display is set is made up of button images that is required for that animation display.

It should be noted that, in what follows, each of two or more button images for forming button animation is appropriately referred to as an animation frame.

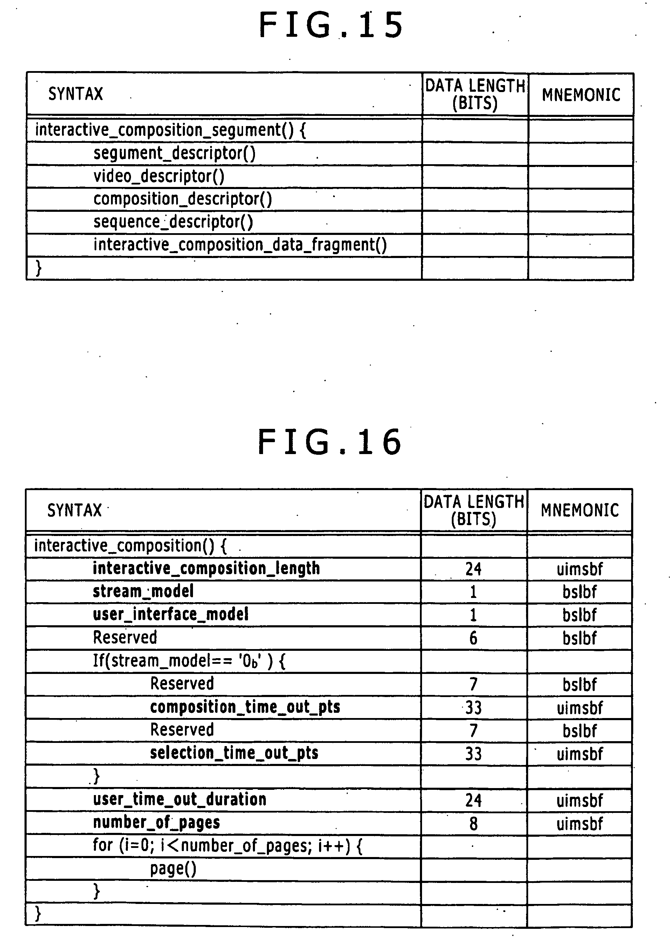

FIG. 15 shows a syntax indicative of an exemplary structure of ICS header information. An ICS header is made up of block segment_descriptor(), block video_descriptor(), block composition_descriptor(), block sequence_descriptor(), and block interactive_composition_data_fragment(). Block segment_descriptor() is indicative that this segment is ICS. Block video_descriptor() is indicative of a frame rate and an image frame size of video that is displayed at the same time as this menu. Block composition_descriptor() includes field composition_state (not shown) and is indicative of a status of this ICS. Block sequence_descriptor() is indicative whether this ICS extends over two or more PES packets.

To be more specific, this block sequence_descriptor() is indicative whether the ICS included in the current PES packet is the head ICS or the trail ICS of one IG stream.

Namely, as described above, if the data size of an ICS is relatively large for the PES packet having a fixed data size of 64KB, the ICS is divided into predetermined portions each to be packed in a PES packet. At this moment, the header shown in FIG. 15 may only given to the start and end PES packets of the PES packets in which the ICS were dividedly packed. If this block sequence_descriptor() is indicative of the start and the end, it indicates that the ICS is stored in one PES packet.

FIG. 16 shows a syntax indicative of an exemplary structure of block interactive_composition_data_fragment(). It should be noted that, in FIG. 16, the own block is indicated as block interactive_composition(). Field interactive_composition_length has a data length of 24 bits and is indicative of the length subsequent to this field interactive_composition_length of block interfactive_composition(). Field stream_model has a data length of one bit and indicates whether this stream is multiplexed or not.

If the value of field stream_model is "0", then it indicates that this stream is multiplexed, indicating the possibility that the interactive graphics stream and other associated elementary streams are multiplexed in the MPEG2 transport stream. If the value of field stream_model is "1", it indicates the stream is not multiplexed, indicating that there is only an interactive graphics stream in the MPEG2 transport stream. Namely, an interactive graphics stream can be multiplexed with an AV stream or independently, configure a clip AV stream. It should be noted that an interactive graphics stream that is not multiplexed can be defined only as an asynchronous sub path.

Field user_interface_model has a data length of one bit and indicates whether the menu to be displayed by this stream is a popup menu or a normally displayed menu. Display and no display of a popup menu can be controlled by a user operation through the on/off button of a remote control commander, for example. On the other hand, display or no display of a normally display menu cannot controlled by a user operation. If the value of field user_interface_model is "0", it indicates a popup menu; if the value of this field is "1", it indicates a normally display menu. It should be noted that a popup menu is permitted only when the value of field stream_model is "1" and the stream is not multiplexed with another elementary stream.

If the value of field stream_model is "0", then field composition_time_out_pts and field selection_timeout_pts below If statement If (stream_model=='0_{b}') are validated. Field composition_time_out_pts has a data length of 33 bits and is indicative of a time at.which this menu disappears. Field selection_time_out_pts has a data length of 33 bits and is indicative of a time at which the selection in this menu display is disabled. Each of these times is written in PTS (Presentation Time Stamp) specified in MPEG2.

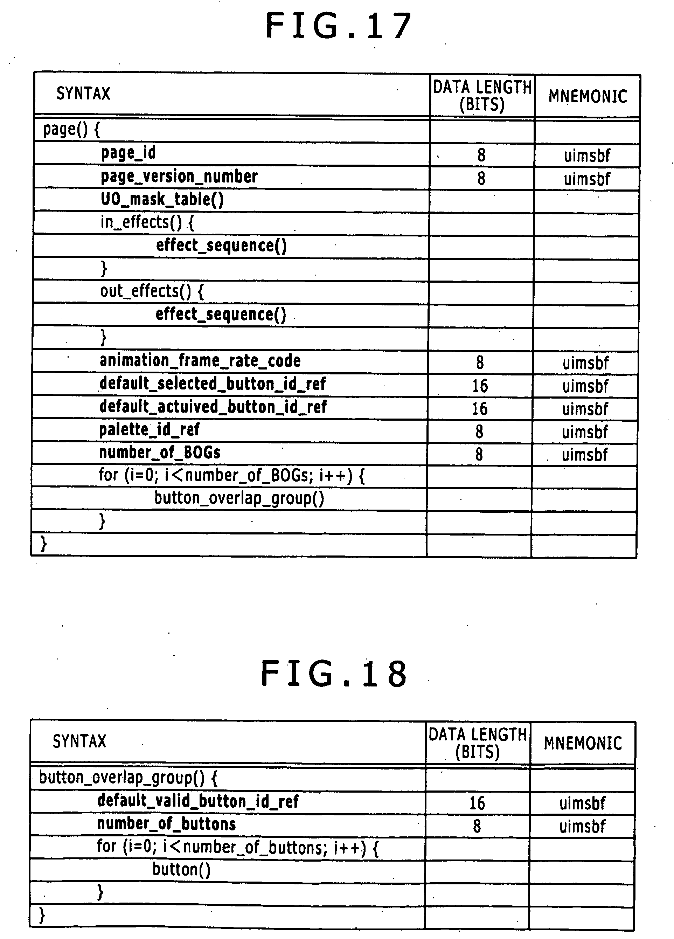

FIG. 17 shows a syntax indicative of an exemplary block page(). Field page_id has a data length of 8 bits and is indicative of the ID for identifying this page. Field page_version_number has a data length of 8 bits and is indicative of the version number of this page. Next block UO_mask_table() is indicative of a table in which a user operation (UO) that is disabled during display of this page is written.

Block in_effect() is indicative an animation block that is displayed when this page is displayed. An animation sequence is written in block effect_sequence() in braces {}. Block out_effect() is indicative of an animation block that is displayed when this page ends. An animation sequence is written in block effect_sequence() in braces {}. These blocks in_effect() and out_effect() are animations that are executed when this ICS is found when a page move is executed.

Next field animation_frame_rate code has a data length of 8 bits and is indicative of a setting parameter of an animation frame rate when the button image of this page is animated. For example, let the frame rate of the video data in the clip AV stream file to which this ICS corresponds be V_{frm} and the animation frame rate concerned be A_{frm}, then the value of field animation_frame_rate_code can be expressed in a ratio as V_{frm/}A_{frm}.

Field default_selected_button_id_ref has a data length of 16 bits, indicating the ID for specifying a button that is first selected when this page is displayed. Next field default_activated_button_id_ref has a data length of 16 bits and is indicative of the ID for specifying a button that automatically becomes in an execution state when a time specified by field selection_time_out_pts described with reference to FIG. 16 is reached.

Field palette_id_ref has a data length of 8 bits and is indicative of the ID of a palette to be referenced by this page. Namely, this field palette_id_ref specifies the color information in the PDS in an IG stream.

Next field number_of_BOGs has a data length of 8 bits and is indicative of the number of BOGs to be used in this page. The loop subsequent to the next for-statement is repeated by the number specified in this field number_of_BOGs and the definition for each BOG is made by block button_overlap_group().

FIG. 18 shows a syntax indicative of an exemplary structure of block button_overlap_group(). Field default_valid_button_id_ref has a data length of 16 bits and is indicative of the ID of a button that is first displayed in the BOGs defined by this block button_overlap_group(). Next field number_of_buttons has a data length of 8 bits and is indicative of the number of buttons used in this BOGs. The loop subsequent to the next for-statement is repeated by the number indicated by this field number_of_buttons and each button is defined by block button().

Namely, as described above, BOGs can have two or more buttons and the structure of each of these buttons is defined by block button(). The button structure defined by this block button() is button that is actually displayed.

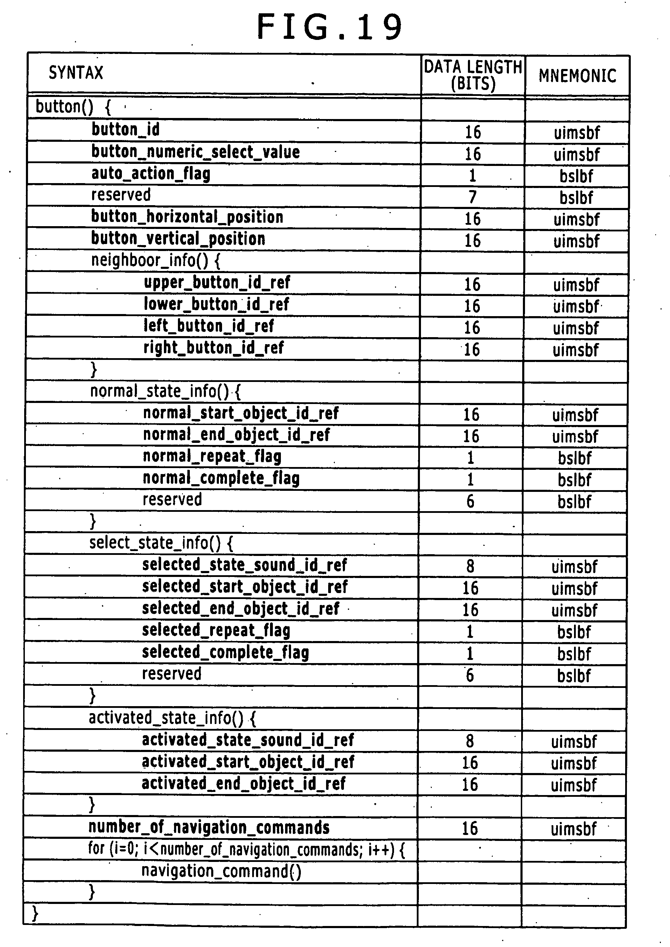

FIG. 19 shows a syntax indicative of an exemplary structure of block button(). Field button_id has a data length of 16 bits and is indicative of the ID for identifying this button. Field button_numeric_select_value has a data length of 16 bits and is indicative of the allocation of this button to a numeric key on the remote control commander. Flag auto_action_flag has a data length of one bit and is indicative whether the function allocated to that button is automatically executed when this button becomes in a selected state.

In what follows, the button in which the allocated function is automatically executed as defined in flag auto_action_flag when the button becomes in a selected state is appropriately referred to as an auto action button.

Field button_horizontal_position and field button_vertical_position have each a data length of 16 bits and are indicative of the horizontal position and vertical position (height) of this button on the screen.

Block neighbor_info() is indicative of the peripheral information of this button. Namely, the value in this block neighbor_info() is indicative which button becomes in a selected state when the direction key on the remote control commander is operated with this button put in a selected state for example. In block neighbor_info(), field upper_button_id_ref, field lower_button_id_ref, field left_button_id_ref, and field right_button_id_ref, each having a data length of 16 bits, are each indicative of the ID of the button that becomes in a selected state when an upward operation, a downward operation, a leftward operation, and a rightward operation have been done, respectively.

Subsequent block_normal_state_info(), block selected_state_info(), and block activated_state_info() are indicative of the button information in a normal state, a selected state, and an execution state, respectively.

First, block normal_state_info() will be described. Field normal_start_id_ref and field normal_end_id_ref have each a data length of 16 bits are indicative of the IDs for specifying start and end objects, respectively, of the animation of the button in a normal state. Namely, these fields normal_start_object_id_ref and normal_end_object_id_ref specify, for the corresponding ODS, a button image (namely, an animation frame) for use in the animation display of the button.

Next flag normal_repeat_flag has a data length of one bit and is indicative whether the animation of this button is repeated or not. For example, if the value of flag normal_repeat_flag is "0", it indicates that the animation is not repeated; if the value of this flag is "1", it indicates that the animation is repeated. Next flag normal_complete_flag has a data length of one bit and controls an animation operation when this button shifts from normal state to selected state.

The following describes block selected_state_info(). This block selected_state_info() is attached with field selected_state_sound_id_ref for specifying sound for the above-mentioned block normal_state_info(). Field selected_state_sound_id_ref has a data length of 8 bits and is indicative of a sound file that is reproduced for the selected button. For example, the sound file is used for an effect that is sounded when the button shifts from normal state to selected state.

Field selected_start_object_id_ref and field selected_end_object_id_ref, each having a data length of 16 bits, are indicative of the IDs for specifying the start and end objects of the animation of the selected button, respectively. Next flag selected_repeat_flag having a data length of one bit is indicative whether the animation of this button is repeated or not. For example, if the value of this flag is "0", it indicates that the animation is not repeated; if the value is "1", it indicates that the animation is repeated.

Next flag selected_complete_flag has a data length of one bit. This flag selected_complete_flag controls an animation operation that is executed when this button shifts from selected state to another state. Namely, flag selected_complete_flag is used when the button shifts from selected state to execution state and when the button shifts from selected state to normal state.

As with above, if the value of flag selected_complete_flag is "1", the animation defined in the selected state is all displayed when this button shifts from the selected state to another state. To be more specific, if the value of flag selected_complete_flag is "1" and an operation is done to shift the button from the selected state to another state during display of the animation indicative of the selected state of this button, animation display is executed from the animation frame displayed at that moment to the animation frame indicated by the above-mentioned field selected_end_object_id_ref.

If the value of flag selected_complete_flag is "1" and repetition is specified by flag selected_repeat_flag (the value is "1"), animation display is also executed from the animation frame displayed at that moment to the animation frame specified by the above-mentioned field selected_end_object_id_ref.

In this case, if the button is put in a state in which the button selection is disabled or the button display itself is erased, but as long as the timing of these transitions is during the display of animation, the animation display is executed up to the animation frame specified by field selected_end_object_id_ref and then the button is shifted to another state.

The state in which button selection is disabled may be a state in which button selection is disabled by the specification of the above-mentioned field selection_time_out_pts or a state in which the menu is automatically initialized by the specification of field user time out duration.

On the other hand, if the value of flag selected_complete_flag is "0", the animation defined for the selected button is not displayed up to the animation frame specified by field selected_end_object_id_ref when this button shifts from the selected state to another state, but the animation display is stopped at the time when the status transition is specified, thereby displaying the button of another state.

In block activated_state_info(), field activated_state_sound_id_ref has a data length of 8 bits and is indicative of a sound file that is reproduced for the button in the execution state. Field activated_start_object_id_ref and field activated_end_object_id_ref, each having a data length of 16 bits, are indicative of the IDs for specifying the start and end animation frames (namely, button images), respectively, of the animation of the button in this execution state. If field activated_start_object_id_ref and field activated_end_object_id_ref reference the same button image, it indicates that only one button image is related with the button in this execution state.

It should be noted that, with field activated_start_object_id_ref or field activated_end_object_id_ref, the value 0xFFFF, indicating that no button image is specified. For example, if the value of field activated_start_object_id_ref is 0xFFFF and the value of field activated_end_object_id_ref is indicative of a valid button image, then it indicates that the button in the execution state is not related with a button image. If the value of field activated_start_object_id_ref is indicative of a valid button image and the value of field activated_end_object_id_ref is 0xFFFF, then it indicates that the button is handled as an invalid button.

Next field number_of_navigation_commands has a data length of 16 bits and is indicative of the number of commands to be embedded in this command. The loop subsequent to the next for-statement is repeated by the number of times specified in field number_of navigation_commands, defining command navigation_command() to be executed by this button. In other words, two or more commands can be executed by one button.

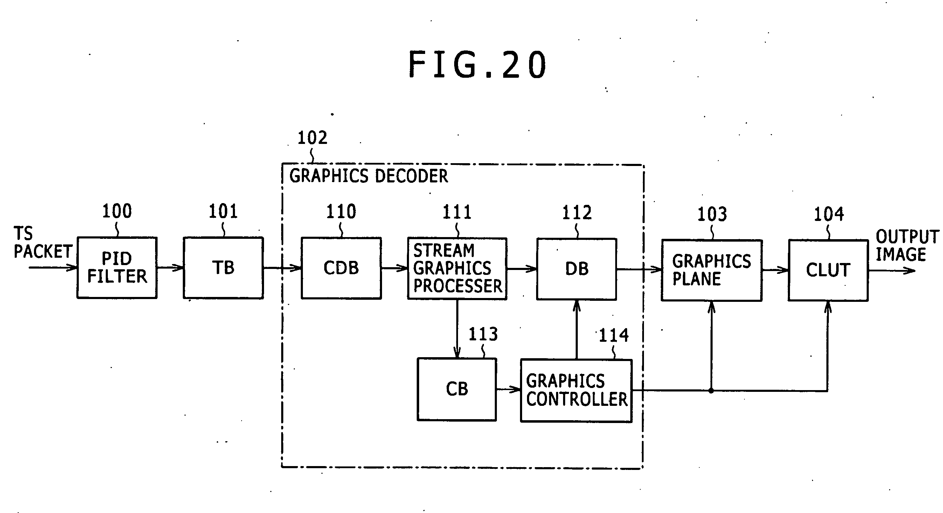

The following describes a decoder model of interactive graphics (IG) with reference to FIG. 20. It should be noted that a configuration shown in FIG. 20 is capable of commonly decoding interactive graphics and presentation graphics.

First, when a disc is loaded on a player, index file "index.bdmv" and movie object file "MovieObject.bdmv" are read from the loaded disc, thereby displaying a predetermined top menu. When a title to be reproduced is specified through the top menu, a corresponding navigation command in the movie object file calls a play list file for reproducing the specified title. Then, in accordance with the description of this play list file, a clip AV stream file requested by the play list for reproduction, namely, an MPEG2 transport stream, is read from the loaded disc.

The transport stream is supplied to a PID filter 100 as a TS packet and the PID is analyzed by this filter. The PID filter 100 identifies the supplied TS packet whether the TS packet contains video data, audio data, menu data, or subtitle data. If the PID is found containing menu data, namely, interactive graphics, or presentation graphics, the configuration shown in FIG. 20 is enabled. It should be noted that presentation graphics is not directly associated with the present invention, so that the description thereof will be omitted.

In the PID filter 100, a TS packet for storing the data corresponding to the decode model from the transport stream and the selected TS packet is accumulated in a transport buffer (TB) 101. In the TB 101, the data is taken out of the payload of the TS packet. When the data large enough for making up a PES packet has been accumulated in the TB 101, the PES packet is reconstructed on the basis of PID. Namely, in this phase, each of the segments divided into TS packets is integrated with each other.

Each reconstructed PES packet is removed of the PES header thereof to be supplied to a decoder 102 in an elementary stream format, thereby being accumulated in a CDB (Coded Data Buffer) 110. On the basis of STC, if an elementary stream that has reached the time specified in the corresponding DTS is found among the elementary streams accumulated in the CDB 110, the segment concerned is transferred to a stream graphics processor 111 to be decoded into segments.

The stream graphics processor 111 stores each decoded segment into a DB (Decoded object Buffer) 112 or a CB (Composition Buffer) 113. Any segment of a type that has DTS, such as PCS, ICS, WDS, and ODS, is stored in the DB 112 or the CB 113 at the time specified in the corresponding DTS. Any segment of a type that has no DTS, such as PDS, is immediately stored in the CB 113.

A graphics controller 114 controls segments. The graphics controller 114 reads an ICS from the CB 113 at the time specified in the PTS corresponding to that ICS and, at the same time, a PDS referenced by that ICS. Also, the graphics controller 114 reads an ODS referenced by that ICS from the DB 112. Then, the graphics controller 114 decodes the read ICS and ODS to form the data necessary for displaying a menu screen including a button image, writing the formed data to a graphics plane 103.

In addition, the graphics controller 114 decodes the read PDS read from the CB 113 to form a color palette table as described before with reference to FIG. 11 and writes the color palette table to a CLUT 104.

The image written to the graphics plane 103 is read in a predetermined timed relation, with a frame timing for example, to configure output image data with color information attached by referencing the color palette table of the CLUT 104, the resultant output image data being outputted.

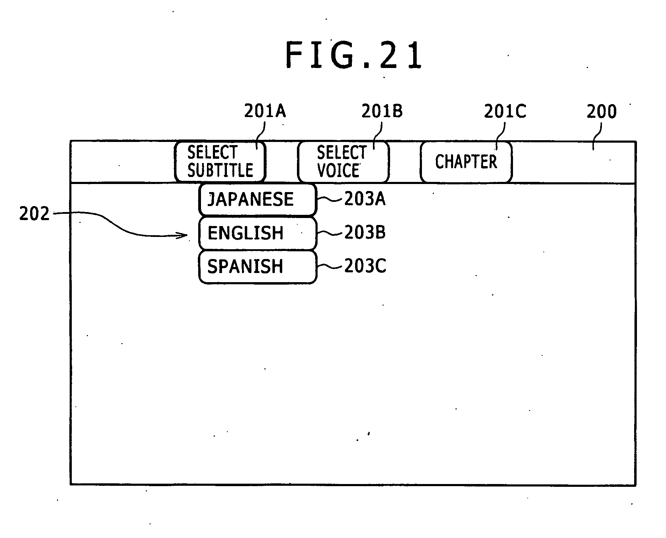

The following schematically describes an example in which the menu display based on IG stream is integrated with a video stream to be reproduced on the basis of a main path play list and an image obtained as a result of this integration is displayed, with reference to FIGS. 21 through 23.

FIG. 21 shows an exemplary menu display screen that is displayed by an IG stream. In this example, a background 200 of the menu is displayed by an IG stream and, at the same time, a button 201A, a button 201B, and a button 201C are shown. For these buttons, button images indicative of normal state, selected state, and execution state are allocated, respectively. The menu background 200 is displayed by a button disabled for movement and set with no command (this button is called a special button). It should be noted that each of the above-mentioned buttons cannot be displayed in an overlapped manner. Hence, in portions between the button-201A, button-201B, and button 201C and portions to the left of the button 201A and to the right of the button 201C, independent special buttons are arranged.

When the right or the left is specified through the cross key of the remote control commander for example, the button image of normal state and the button image of selected state are alternately displayed on the button 201A, the button 201B, and the button 201C according to the specification operation. Further, in the example shown in FIG. 21, when any of these-buttons is in a selected state, a pulldown menu 202 corresponding to the selected button is displayed by an operation for specifying downward direction through the above-mentioned cross key or an operation of the enter key, for example.

The pulldown menu 202 is made up of a plurality of a button 202A, a button 203B, and a button 203C, for example. Like the above-mentioned button 201A, button 201B, and button 201C, these buttons making up the pulldown menu 202 can have button images indicative of normal state, selected state, and execution state. When upward or downward is specified through the cross key of the remote control commander, for example, with the pulldown menu 202 displayed, the button image of normal state and the button image of selected state are alternately displayed on the buttons 203A, 203B, and 203C according to the specification operation. For example, when the enter button is operated, the button image of selected state is changed to the button image of execution state and the button image of execution state is displayed on the basis of the display control processing practiced as one embodiment of the invention to be described later, thereby causing the function allocated to that button to be executed by the player.

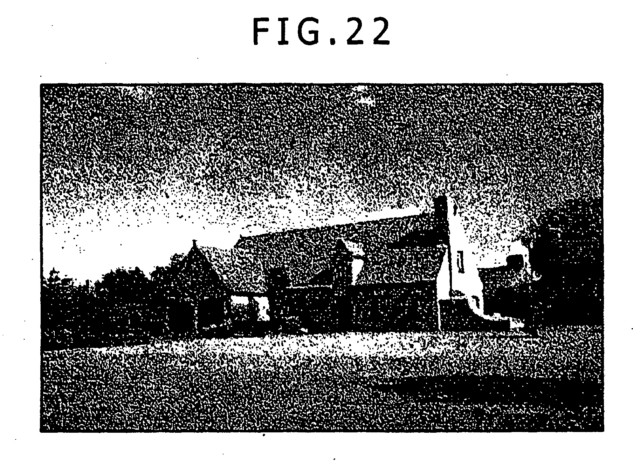

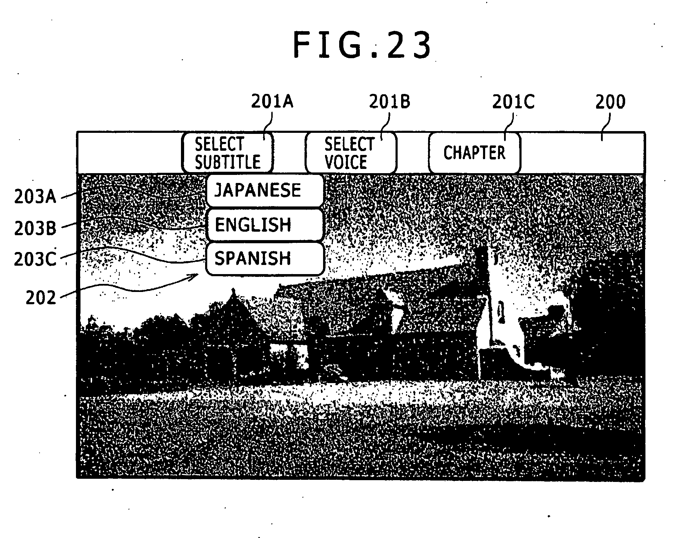

The following describes the integration of the menu display screen described above and the movie data that is displayed on the movie plane 10 reproduced by a play item of the main path, an example of which is shown in FIG. 22. In the screen shown in FIG. 21, opacity α is set to "0" to the portions other than the menu display including the pulldown menu 202 and the interactive graphics plane 12 is integrated with the movie plane 10. Consequently, as shown in FIG. 23 for example, a display screen is obtained in which the movie data shown in FIG. 23 is integrated with the menu display screen shown in FIG. 21.

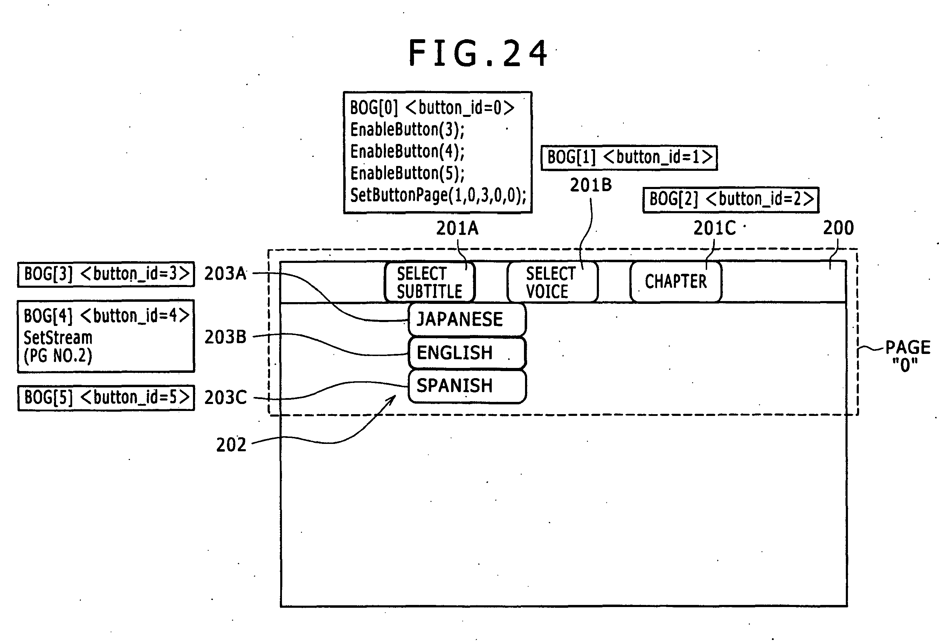

The following schematically describes an exemplary method of realizing a pulldown menu display screen in the above-mentioned menu display screen. For example, the following describes a case in which the pulldown menu 202 is displayed by operating the enter key of the remote control commander with the button 201A in the selected state, with reference to FIG. 24. It should be noted that, with reference to FIG. 24, portions similar to those shown in FIG. 21 are denoted by the.same reference numerals and the description of details thereof will be omitted.

In the example of FIG. 24, it is assumed that a menu display screen including the background 200, the button 201A, the button 201B, the button 201C, and the pulldown menu 202 be displayed on a menu screen indicated by page "0". The button 201A, the button 201B, and button 201C are belong to a BOG (Button Overlap Group) in which value button_id that is the ID for identifying these buttons is defined as "1", "2" and "3" for each of these buttons. The buttons 203A, 203B, and 203C in the pulldown menu 202 corresponding to the button 201A belong to a BOG in which value button_id is defined by "3", "4", and "5".

In the case of the button 201A for example, in block button() for defining the button 201A, commands are written as follows in a portion of command navigation_command() to be executed by the button 201A, for example. It should be noted that each of the commands described below is a command that is defined by the BD-ROM logical format.
EnableButton(3);
EnableButton(4);
EnableButton(5);
SetButtonPage (1,0,3,0,0)

Command EnableButton() is indicative that a button with a value indicated in parentheses () defined as value button_id is put in an enabled state (or a valid state). On the other hand, in order to put a button into a disabled state or invalid state, command DisableButton() is used.

Command SetButtonPage() is used to set a particular page so as to allow a button enabled by command EnableButton() to be selectable, for example. Command SetButtonPage() has five parameters, button_flag, page_flag, button_id, page_id, and out_effect_off_flag. Parameter button_flag is indicative that the value of the third parameter button_id is set to a PSR (Player Status Register), a memory in the player for managing reproduction state. Parameter page_flag is indicative whether page identification value page_id held in the PSR ' is to be changed to the fourth parameter, page_id. Parameter out_effect_off_flag is indicative whether, when the button 201A has been put in a deselected state, the effect defined for the content list 201 is to be executed or not.

On the other hand, command naviation_command() that is executed when each of the button 203A, the button 203B, and the button 203C making up the pulldown menu 202 is put in an entered state is also written for these commands. In the example shown in FIG. 24, command SetStream() for setting a stream to be used is written for the button 203B. This example shows use of the second PG stream by command SetStream().

It should be noted that command navigation_command() that is written to each button is illustrative only; for example, it is also practicable, as with the above-mentioned button 203B, to write command SetStream() to the button 203A and the button 203C of the pulldown menu 202 for subtitle selection.

In the menu screen shown in FIG. 24, when the enter button is operated with the button 201A selected, the buttons with value button_id defined by "3", "4" and "5", namely, the button 203A, the button 203B, and the button 203C in the pulldown menu 202, are enabled, upon which corresponding button images are displayed. At this moment, the button 203A displayed with value button_id being "3" is selected on the basis of the description of command SetButtonPage(1,0,3,0,0).

Further, when downward direction is specified through the cross key for example, the button focus is moved down to move the button 203A from the selected state to the normal state and the button 203B from the normal state to the selected state. When the enter key is operated in this state, the second PG stream is selected in accordance with the description of command navigation_command() in the button 203B, upon which the subtitle display is switched to the English subtitle.

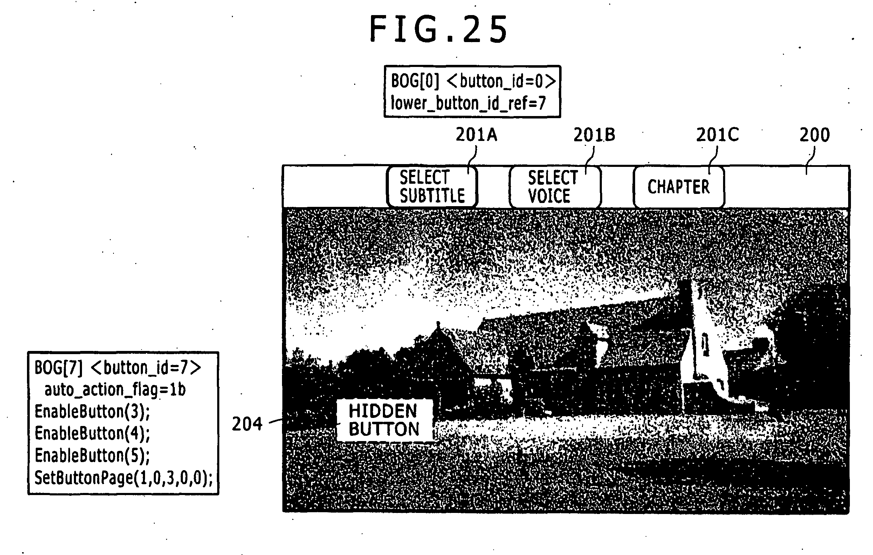

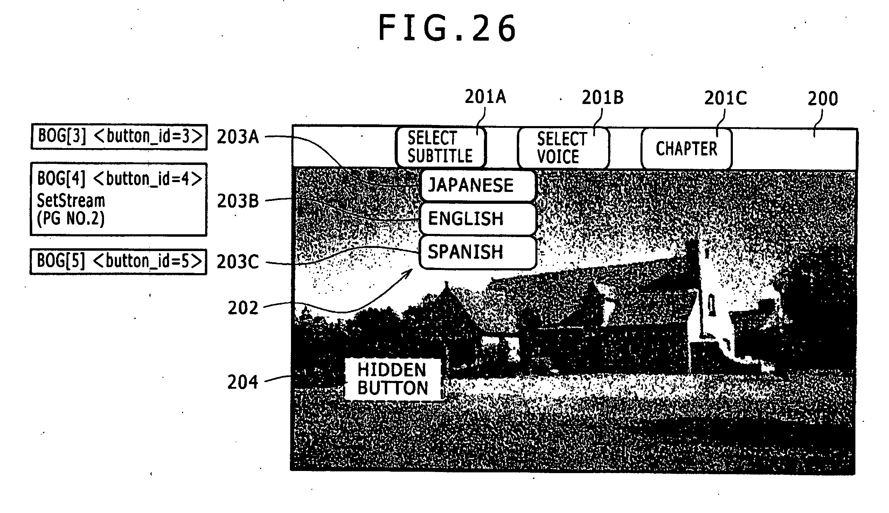

The following describes another example in which downward direction is specified through the cross key of the remote control commander for example with the button 201A in the selected state, thereby displaying the pulldown menu 202, with reference to FIGS. 25 and 26. In the FIGS. 25 and 26, the movie data to be displayed on the movie plane 10 by the main path play item is integrated with the menu display screen.

It should be noted that, referring to FIGS. 25 and 26, portions similar to those in FIGS. 21, 23, and 24 are denoted by the same reference numerals and the detail description thereof will be omitted. For example, it is assumed that, with the button 203A, the button 203B, and the button 203C on the pulldown menu 202 shown in FIG. 26, value button_id is defined by "3", "4", and "5" respectively and, for the button 203B, command SetStream() for using the second PG stream is written.

If the pulldown menu 202 is to be displayed by not the enter key but the downward key for the button selected state, it is possible to use a hidden button 204 that is hidden from the user as shown in FIGS. 25 and 26. The hidden button 204 may be realized by setting opacity α = 0 to the button image data associated with the hidden button 204, for example. In FIGS. 25 and 26, the hidden button 204 is enclosed with dashed line frame for the purpose of description; actually, however, the hidden button 204 is not shown but the image of the back plane (the movie plane 10 for example) is transmissively shown.

Referring to FIG. 25, in block button() for defining the hidden button 204, it is assumed that value button_id for identifying the hidden button 204 be "7" for example and this hidden button 204 belong to a BOG with value button_id defined by "7". Further, in that block button(), it is assumed that the value of flag auto_action_flag be "1b" for example ("b" indicative that the immediately preceding value is binary) and this hidden button 204 be defined so as to automatically shift from the selected state to the execution state. Then, the following commands are written to the portion of command navigation_command() to be executed by the hidden button 204, for example:
EnableButton(3);
EnableButton(4);
EnableButton(5);
SetButtonPage(1,0,3,0,0)

On the other hand, if, for the button 201A for subtitle selection, for example, the value of field lower_button_id_ref is "7" and downward direction is specified through the cross key for example with the button 201A in the selected state, the button with value button_id being "7" (in this example, the hidden button 204) is shifted to the selected state.

When, on the menu display screen shown in FIG. 25, downward direction is specified through the cross key for example with the button 201A in the selected state, the hidden button 204 with value button_id being "7" is selected in accordance with the description of field lower_button_id_ref in the button 201A. The hidden button 204 is defined by flag auto_action_flag so as to automatically shift from the selected state to the execution state. Hence, the buttons with value button_id defined by "3", "4", and "5", namely, the button 203A, the button 203B, and the button 203C of the pulldown menu 202 are enabled in accordance with the description of command EnableButton() in command navigation_command() in the hidden button 204, upon which the corresponding images are displayed (refer to FIG. 26). At this moment, on the basis of the description of command SetButtonPage(1,0,3,0,0), the button 203A with value button_id being "3" is selected.

Further, when downward direction is specified through the cross key for example, the button focus is moved to shift the button 203A from the selected state to the normal state and the button 203B from the normal state to the selected state. When the enter key is operated in this state, the second presentation graphics stream is selected in accordance with the description of command navigation_command() in the button 203B, upon which the subtitle display is switched to English subtitle.

The following describes one embodiment of the present invention. In this embodiment, under a condition that a command subsequent to a.particular command is disabled for execution, the action to be executed by that disabled command is realized by use of a plurality of hidden commands and the properties of command EnableButton() defined in the BD-ROM logical format.

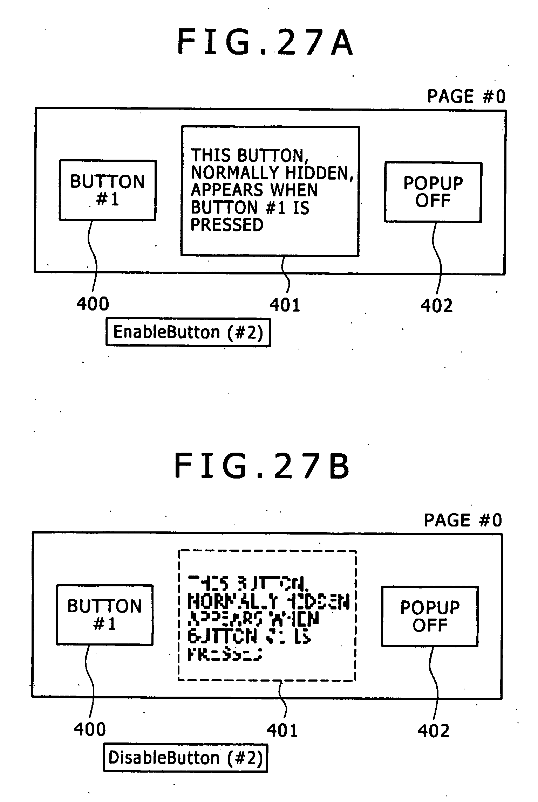

First, the properties of command EnableButton() will be described with reference to FIGS. 27A and 27B. Referring to FIGS. 27A and 27B, a page with page ID being "0" (hereinafter referred to as page #0) is defined as a popup menu. It is assumed that a button 400, a button 401, and a button 402 having button IDs #1, #2, and #3, respectively, be arranged for this page #0.

In the example shown in FIGS. 27A and 27B, with the button 401, the button image of normal state is an image for displaying a text, so that no shift is made to selected state or execution state. The button 400 is used to switch between display and non-display of the button 401. In order to display the button 401, the button 401 must be enabled by use of command EnableButton(#2); in order put the button 401 in non-display state, the button 401 must be disabled by use of command DisableButton(#2).

To be more specific, when command EnableButton(#2) is executed in the button 400, the button 401 is enabled to be displayed as shown in FIG. 27A for example. If command DisableButton (#2) is executed with the button 401 of FIG. 27A displayed, the button 401 is disabled to be taken out of the displayed state as shown in FIG. 27B for example. The button 402 of which button ID is not specified by command EnableButton() and command DisableButton() is not affected by the display and non-display states of the button 401 by the commands of the button 400.

The following describes operations to be executed when (1) by use of command DisableButton() associated with a button, that button itself is disabled and (2) another button belonging to a BOG (Button Overlap Group) to which a button concerned belongs is enabled by command EnableButton(). In the BD-ROM logical format, these operations are defined as follows.

In the case of (1) above wherein, if the button concerned itself is disabled by command DisableButton() associated with that command, the commands associated with that button are executed to the last; if another button is selected during the execution, the selected button is put in the selected state. If there is no selected button, a button most suitable at that moment is put in the selected state. For example, in a page, a button that is set such that it is put in the selected state as default when that page is selected is put in the selected state.

In the case of (2) above wherein, if another button belongs to a BOG to which a button concerned itself belongs is enabled by command EnableButton(), the commands associated with the button concerned are executed to the last; if another button is selected by command, this selected button is put in the selected state. If no selected button is found, then the enabled button is put in the selected state.

To be more specific, command EnableButton() and command DisableButton() executes all commands associated with a button specified by these two commands and put that button in the enabled state or the disabled state. Also, command EnableButton() and command DisableButton() can automatically specify a button that is next put in the selected state. One embodiment of the invention achieves one object of the invention by use of these properties as described above of command EnableButton() and command DisableButton().

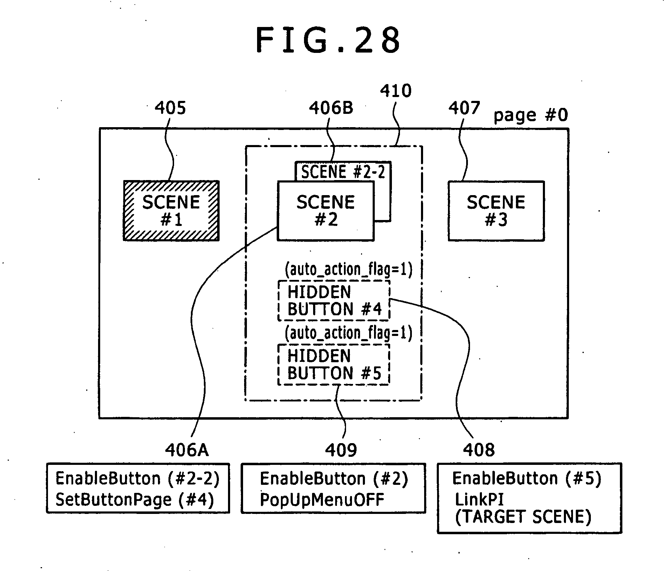

For example, assume a menu screen as shown in FIG. 28. With this menu screen, which is defined as a popup menu, a chapter skip operation is executed by buttons 405, 406, and 407 arranged on page #0. The following assumes that, if a chapter skip operation is executed by use of the button 406, this popup menu be turned off after a stream reproduction position has been changed by that chapter skip operation.

The button 405 is a button that is in the selected state as default on page #0, specifying chapter skip to scene #1. Likewise, the button 406 and the button 407 specify chapter skips to scene #2 and scene #3, respectively. It is assumed that button ID of the button 405 be #1 and button ID of the button 407 be #3. These buttons 405 and 407 are not directly associated with the following description, so that detailed description thereof will be omitted.

It should be noted that, in the page, the default button is specified by field default_selected_button_id_ref of block page() in ICS (refer to FIG. 17).

The button 406 is made up of two buttons 406A and 406B having different IDs. Button ID of the button 406A is #2 and the button ID of the button 406B is #2-2. The button 406B is initially in the disabled state and not displayed. Therefore, for the button 406, only the button 406A is displayed.

Further, two hidden buttons 408 and 409 are arranged for page #0. Button ID of the hidden button 408 is #4 and the button ID of the hidden button 409 is #5. These hidden buttons 408 and 409 belong to a BOG 410 to which the above-mentioned buttons 406A and 406B belong. In FIG. 28, the buttons 406A and 406B and the hidden buttons 408 and 409 are arranged at different positions for the convenience of description; actually, however, these buttons are arranged at a same position because these buttons all belong to the same BOG. This holds true also with the following description.

In the portion of command navigation_command() to be executed by the button 406A, commands are written as follows, for example:
EnableButton(#2-2);
SetButtonPage(#4);

Namely, when the button 406A is put in the execution state, the button 406B is enabled to put the hidden button 408 into the selected state. It should be noted that, although the enabling of the button 406B is not always necessary to achieve one object of the present invention, this is done to indicate the selection of the button 406A, which is useful for the user to recognize the selection of the button 406A. Also, in the above-mentioned example, only parameter button_id is written for command SetButtonPage(); for example, page_id to be specified is page #0 that is a page to which the hidden button 408 of button_id#4 belongs. As described before in Background of the Invention herein, any command written after this command SetButtonPage() is not executed.

The hidden button 408, with the value of flag auto_action_flag being "1b", is defined as an auto action button. In the portion of command navigation_command() to be executed by the hidden button 408, commands are written as follows:
EnableButton(#5);
LinkPI(target scene);

It should be noted that command LinkPI() is used to change the reproduction position to a play item by specifying the play item ID thereof. Therefore, as descried in Background of The Invention herein, the commands written after command LinkPI() are not executed. When this hidden button 408 is put in the selected state, the execution state is automatically entered. consequently, when the hidden button 409 is enabled, the reproduction position is changed to the play item specified by command LinkPI().

The hidden button 409, with the value of flag auto_action_flag being "1b", is defined as an auto action button. In the portion of command navigation_command() to be executed by the hidden button 408, commands are written as follows for example:
EnableButton(#2);
PopUpMenuOFF;

It should be noted that command PopUpMenuOFF is used to end the popup menu. Therefore, as descried in Background of The Invention herein, the commands written after command PopUpMenuOFF are not executed. When this hidden button 409 is put in the selected state, the execution state is automatically entered. consequently, when the button 406A is enabled, the popup menu is ended.

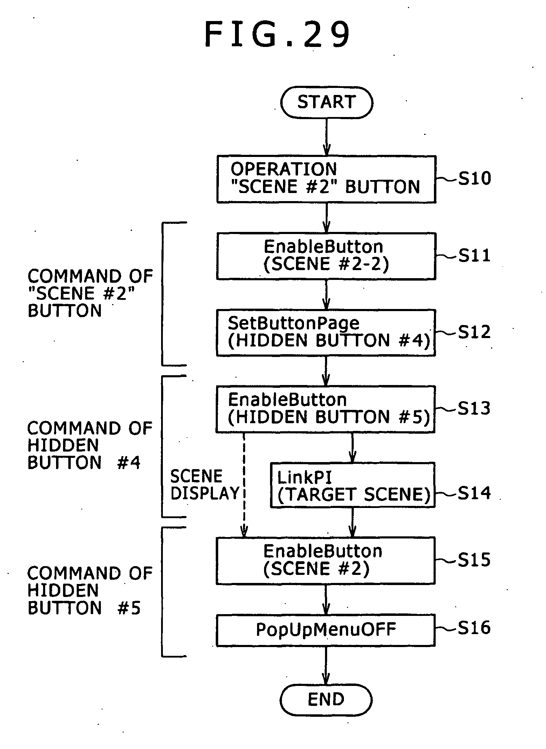

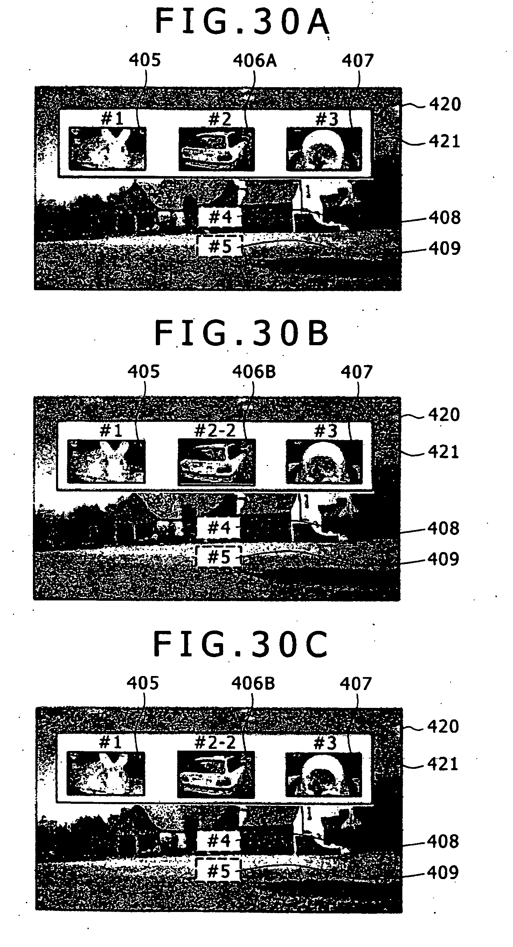

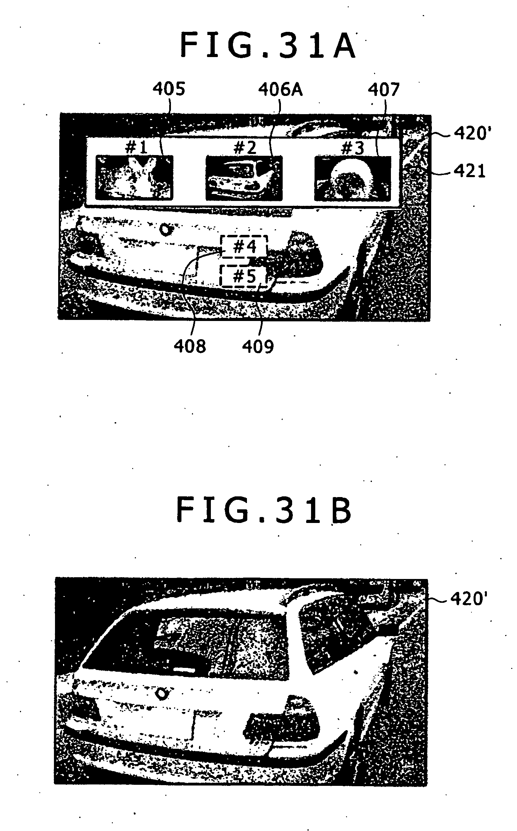

The following describes exemplary operations of a popup menu configured as illustrated in FIG. 28, with reference to FIGS. 29 through 31. FIG. 29 is a flowchart indicative of a sequence of processing operations from the specification of a chapter skip for the button 406A to the turning off of the popup menu. FIGS. 30 and 31 show exemplary popup menu status changes that take place in accordance with the sequence of processing operations shown in this flowchart. It should be noted that, referring to FIGS. 30 and 31, portions similar to those shown in FIG. 28 are denoted by the same reference numerals and detail description thereof will be omitted.

As illustrated in FIG. 30A, a menu display 421 is defined as a popup menu and is displayed as integrated with a video 420 based on main path movie data. Further, for buttons 405, 406A, and 407 shown on the menu display 421, thumbnail images representative of scenes of chapter skip destinations are used as button image. A button 406B, which is a minor change of the image of the button 406A, is shown as if indicative of the selected state for the button image of the button 406A. In the example of FIG. 30, the frame of the button image of the button 406B is thicker than the button image of the button 406A.

It should be noted that the hidden buttons 408 and 409 are actually not displayed; however, for the purpose of description, these buttons are.shown with dashed lines in FIGS. 30 and 31. The button 406 is written as scene #2 button in FIG. 29. The hidden buttons 408 and 409 are written hidden button #4 and hidden button #5, respectively, in FIG. 29.

Now, in step S10 of the flowchart shown in FIG. 29, in order to make a chapter skip to scene #2, the cross key or the enter key for example on the remote control commander is operated to shift the button 406A from normal state to selected state and then from selected state to execution state.

When the button 406A is put in the execution state, the commands associated with the button 406A are executed. To be more specific, in step S11, the button 406B is enabled by command EnableButton(#2-2), thereby displaying a button image indicative of the button 406B in the selected state. Next, in step S12, the hidden button 408 is put in the selected state by command SetButtonPage(#4). An exemplary menu display 421 to be shown when steps S11 any 512 have been executed is shown in FIG. 30B.

The hidden button 408, with the value of flag auto_action_flag being "1b", is defined as an auto action button, so that, when the hidden button 408 has been put in the selected state, the hidden button 408 is automatically put in the execution state, thereby automatically executing the commands associated with the hidden button 408. Namely, in step S13, the hidden button 409 is enabled by command EnableButton(#5). In step S14, the reproduction position is changed to a play item specified by command LinkPI(target scene).

It should be noted that the hidden button 408 and the hidden button 409 are set such that these buttons are not selected by the user through the remote control commander for example. For example, the IDs of the hidden button 408 and the hidden button 409 are not written in block neighbor_info() in block button().

When the hidden button 409 has been enabled by command EnableButton(#5), the hidden button 409 is put in the selected state because of the above-described properties of command EnableButton(). Namely, the hidden button 408 and the hidden button 409 belong to the same BOG 410 and the hidden button 409 is in the selected state unless another button is selected by command until command LinkPI(target scene) is executed. This is illustrated in FIG. 30C.

When the reproduction position has actually been changed by command LinkPI(target scene) in step S14, the procedure goes to step S15. In step S15, the hidden button 409 selected in step S13 is automatically put in the execution state in accordance with the definition of auto action button, in which command Enablebutton(#2) associated with the hidden button 409 is executed. Consequently, as illustrated in FIG. 31A, the button 406A is enabled, thereby displaying a button image corresponding to the button 406A. Then, in the hidden button 409, command PopUpMenuOFF written next to command EnableButton(#2) is executed to turn off the display of the menu display 421 that is a popup menu, thereby displaying only a video 420' of the main path by the play item specified by command LinkPI(target scene) as shown in FIG. 31E for example.

As described above, an application for turning off the popup menu after the execution of command LinkPI() can be realized by use of the properties in the case where another button in the BOG in which the button concerned itself is contained of the case (2) described above in command EnableButton() is enabled by command EnableButton().

It should be noted that, in the above-mentioned example, the hidden button 408 is selected by use of command SetButtonPage() in step S12. Command SetButtonPage() can put even a disabled button into the selected state. On the other hand, depending on an installation condition of the player, the hidden button 409 may be in the enabled state and the hidden button 408 may be in the disabled state by the last execution. Hence, the hidden button 408 is uniquely enabled by use of command SetButtonPage().

Also, in the above-mentioned example, a button already in the selected state as default is specified by field default_selected_button_id_ref of block() for page #0 on which the menu display 421 that is a popup menu is shown in ICS. This configuration allows the avoidance of the condition in which the hidden button 409 is in the selected state when the popup menu is turned on again after the popup menu has been turned off by the above-mentioned procedure.

Further, the play item that can be specified by command LinkPI() in step S14 is limited to a play item that is referenced from the currently reproduced play list. This is because, when a play list is reproduced, the IG streams associated with this play list are all read from the disc to be loaded in the player and, when the play list to be reproduced is changed to another, the loaded IG streams are discarded from memory, after which new IG streams are loaded.

In the above-mentioned example, the command to be executed after command EnableButton() by the hidden button 408 is command LinkPI(). However, it is also practicable to execute another command. In the above-mentioned example, only two commands, command EnableButton() and command LinkPI(), are associated with the hidden button 408. However, it is also practicable to associate more commands to the hidden button 408. For example, the BD-ROM logical format allows the association of up to 255 commands with one button. With the present embodiment of the invention, a maximum of 255 commands including command EnableButton() can also be associated witch one button. According to the above-described properties of command EnableButton(), a maximum of 255 commands associated with the hidden button 408 are all executed and then commands associated with the hidden button 409 enabled by command EnableButton() are executed. This holds true also with the hidden button 409.

It should be noted that, in the above description, command LinkPI(), command PopUpMenuOFF, and command SetButtonPage() are mentioned for example as the commands after which no command is executed. However, there are other commands after which no command is executed; for example, command SetStream() for switching between streams.

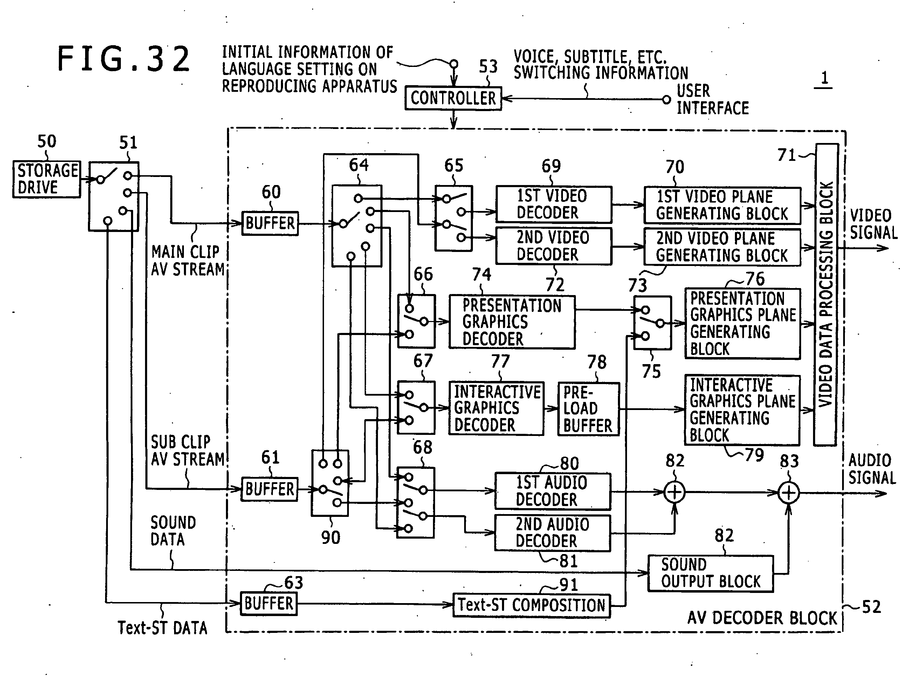

The following describes a reproducing apparatus that can be practiced as one embodiment of the invention. Referring to FIG. 32, there is shown an exemplary configuration of a reproducing apparatus 1 practiced as one embodiment of the invention. The reproducing apparatus 1 has storage drive 50, a switch circuit 51, an AV decoder block 52, and controller 53. The storage drive 50 can reproduce the above-described BD-ROM for example loaded thereon.

The controller 53 is made up of a CPU (Central Processing Unit), a ROM (Read Only Memory) in which programs to be executed by the CPU are stored in advance, and a RAM (Random Access Memory) for use as a work memory to be used when programs are executed by the CPU, for example. Configured as described, the controller 53 controls the entire operation of the reproducing apparatus 1.

Although not shown, the reproducing apparatus 1 has a user interface that provides the user predetermined information and outputs control signals corresponding to user operations done. For example, the user interface is a remote control commander through which the user executes remote communication with the reproducing apparatus 1 on the basis of predetermined wireless communications means such as infrared data communication, for example. The remote control commander has a direction key, such as a cross key, specifying up and down and left and right directions, numeric keys, and function keys, for example. It should be noted that the cross key may have any other shapes as long as the above-mentioned directions can be specified.

The remote control commander generates control signals in accordance with operations done through these input means and demodulates the generated control signals into infrared signals, outputting these infrared signals. The reproducing apparatus 1 receives the outputted infrared signals at an infrared receiver, not shown, converts the received infrared signals into electrical signals, demodulates the electrical signals to restore the original control signals. These control signals are supplied to the controller 53. The controller 53 controls the reproducing apparatus 1 in accordance with these controls signals and as instructed by programs.

The user interface is not limited to the remote control commander; for example, the user interface may be configured by switches arranged on an operator panel of the reproducing apparatus 1. It is also practicable to arrange, on the reproducing apparatus 1, communication means for communicating through a LAN (Local Area Network), through which a signal supplied from an external computer is supplied to the controller 53 as a control signal by the user interface.

The initial information of language setting of the reproducing apparatus 1 is stored in a nonvolatile memory for example of the reproducing apparatus 1. This language setting initial information is read from memory at the power-on sequence of the reproducing apparatus 1, for example, to be supplied to the controller 53.

When a disc is loaded on the storage drive 50, the controller 53 reads file index.bdmv and file MovieObject.bdmv from the loaded disc through the storage drive 50 and read a play list file from directory "PLAYLIST" on the basis of the description of the read files. The controller 53 reads a clip AV stream referenced by a play item included in the play list file from the disc through the storage drive 50. Also, if the play list includes a sub play item, the controller 53 reads a clip AV stream and subtitle data referenced by the sub play item from the disc through the storage drive 50.

In what follows, a clip AV stream corresponding to a sub play item is referred to as a sub clip AV stream and a clip AV stream corresponding to main play item relative to sub play item is referred to as a main clip AV stream.

The data outputted from the storage drive 50 is demodulated and error-corrected by a demodulator and error corrector, not shown, to be restored as a multiplexed stream. This multiplexed stream is a transport stream with data type and sequence identified by PID and divided into a predetermined size for time-division multiplexing. This multiplexed stream is supplied to the switch circuit 51. The controller 53 controls the switch circuit 51 in a predetermined manner on the basis of PID, for example, to classify the data into types and supplies the resultant main clip AV stream packets to a buffer 60, the sub clip AV stream packets to a buffer 61, the sound data packets to a sound output block 62, and the text data packets to a buffer 63.

The main clip AV stream packets stored in the buffer 60 are read from the buffer 60, packet by packet, under the control of the buffer controller 53 to supplied to a PID filter 64. The PID filter 64 classifies the received packets on the basis of the PIDs thereof into packets based on video stream, packets based presentation graphics stream (or PG stream), packets based on interactive graphics stream (or IG stream), and packets based on audio stream.

On the other hand, the packets of sub clip AV stream stored in the buffer 61 are read from the buffer 61, packet by packet, under the control of the controller 53 to be supplied to a PID filter 90. On the basis of the PIDs of the received packets, the PID filter 90 classified the packets into the packets based on video stream, packets based on PG stream, the packets based on IG stream, and the packets based on audio stream.

The.packets based on video stream classified by the PID filter 64 and the packets based on video stream classified by the PID filter 90 are supplied to a PID filter 65 to be classified by PID. Namely, the PID filter 65 classifies the received packets such that the packets based on main clip AV stream received from the PID filter 64 are supplied to a first video decoder 69 and the packets based on sub clip AV stream received from the PID filter 90 are supplied to a second video decoder 72.

The first video decoder 69 takes a video stream from the payload of each supplied packet in a predetermined manner and decodes the video stream compressed by MPEG2. The output of the first video decoder 69 is supplied to a first video plane generating block 70 to generate a video plane. A video plane is generated by writing one frame of base-band digital video data to a frame memory, for example. The video plane generated by the first video plane generating block 70 is supplied to a video data processing block 71.

In the second video decoder 72 and a second video plane generating block 73, the substantially the same processing as that done in the above-mentioned first video decoder 69 and the first video plane generating block 70 is executed, thereby decoding the video stream to generate a video plane. The video plane generated in the second video plane generating block 73 is supplied to the video data processing block 71.

The video data processing block 71 packs the video plane generated by the first video plane generating block 70 and the video plane generated by the second video plane generating block 73 into one frame in a predetermined manner, for example, thereby generating one video plane. It is also practicable to selectively use the video plane generated by the first video plane generating block 70 and the video plane generated by the second video plane generating block 73 to generate a video plane. This video plane corresponds to the movie plane 10 illustrated in FIG. 9, for example.

The packets based on PG stream classified by the PID filter 64 and the packets based on PG stream classified by the PID filter 90 are supplied to a switch circuit 66. The switch circuit 66 selects one of the packet sequences in'a predetermined manner and supplies the selected packets to a presentation graphics decoder 74. The presentation graphics decoder 74 takes a PG stream from the payload of each packet in a predetermined manner and decodes the PG stream to generate graphics data for displaying a subtitle, supplying the graphics data to a switch circuit 75.

The switch circuit 75 selects this graphics data and the subtitle data based on the text data to be described later in a predetermined manner and supplies the selected data to a presentation graphics plane generating block 76. The presentation graphics plane generating block 76 generates a presentation graphics plane on the basis of the received data and supplies the generated plane to the video data processing block 71. This presentation graphics plane corresponds to the subtitle plane 11 illustrated in FIG. 9, for example.

The packets based on IG stream classified by the PID filter 64 and the packets based on IG stream classified by the PID filter 90 are supplied to a switch circuit 67. The switch circuit 67 selects one of the packet sequences in a predetermined manner and supplies the selected packets to an interactive graphics decoder 77. The interactive graphics decoder 77 takes ICS, PDS, and ODS of the IG stream from each IG stream packet and decodes these ICS, PDS, and ODS in a predetermined manner. For example, the interactive graphics decoder 77 takes the data from the payload of each packet to reconstruct a PES packet. Then, on the basis of the header information for example of this PES packet, ICS, PDS, and ODS of the IG stream are taken out. The decoded ICS and PDS are stored in a buffer called a CB (Composition Buffer). The ODS is stored in a buffer called a DB (Decoded Buffer). For example, a preload buffer 78 shown in FIG. 32 corresponds to these CB and DB buffers.

It should be noted that the PES packet has a PTS (Presentation Time Stamp) providing time management information associated with reproduction output and a DTS (Decoding Time Stamp) providing time management information associated with decoding. The menu display based on IG stream is time-managed by the PTS stored in the corresponding PES packet and the menu display thus time-managed is shown. For example, each item of data making up the IG stream stored in the above-mentioned preload buffer 78 is read at a predetermined time based on the PTS.

The data of the IG stream read from the preload buffer 78 is supplied to an interactive graphics plane generating block 79 to generate an interactive graphics plane. This interactive graphics plane corresponds to the interactive graphics plane 12 shown in FIG. 9, for example.

For example, when the state of the button to be displayed shifts from selected state to execution state in response to a predetermined operation done through input means arranged on the user interface, the interactive graphics decoder 77 controls, on the basis of the button image and sound data associated with the button execution state, the displaying of the button image associated with the execution state of that button.

For example, if the displaying of a popup menu is specified through an operation through a key on the remote control commander and the displaying of a popup menu is defined in the play item being reproduced, control is made such that the popup menu is integrated with the main path movie data on the basis of the data of the associated IG stream and the integrated result is displayed. For example, the interactive graphics decoder 77 reads the decoded PDS referenced from the decoded ICS stored in the CB from the CB and, at the same time, reads the corresponding decoded ODS from the DB, thereby forming the data necessary for displaying the button image.

In addition, the interactive graphics decoder 77 extracts a navigation command associated with each button from the decoded ICS stored in the CB. The extracted navigation command is passed to the controller 53, for example. On the basis of the received navigation command, the controller 53 controls each component of the reproducing apparatus 1 in a predetermined manner. Each processing operation defined in the flowchart shown in FIG. 29 is realized by controlling the interactive graphics decoder 77 by the controller 53 on the basis of the navigation command, for example.

The video data processing block 71, including the graphics processing block described before with reference to FIG. 10 for example, integrates a supplied video plane (the movie plane 10 shown in FIG. 10), a presentation graphics plane (the subtitle plane 11 shown in FIG. 10), and an interactive graphics plane (the interactive graphics plane 12 shown in FIG. 10) into one plane of image data in a predetermined manner, which is outputted as a video signal.

The audio stream classified by the PID filter 64 and the audio stream classified by PID filter 90 are supplied to a switch circuit 68. The switch circuit 68 selectively supplies one of these audio streams to a first audio decoder 80 and the other to a second audio decoder B1. The audio streams decoded by the first audio decoder 80 and the second audio decoder 81 are added together by an adder 82.

The sound output block 62 has a buffer memory in which the sound data received from the switch circuit 51 is stored. Then, on the basis of the instruction from the interactive graphics decoder 77, for example, the sound output block 62 decodes the sound data stored in the buffer and outputs the decoded sound data. The outputted sound data is supplied to an adder 83 to be added with the audio stream outputted from the adder 82. A sound data reproduction end time is given to the interactive graphics decoder 77 from the sound output block 62, for example. It should be noted that the cooperative control of the reproduction of sound data and the displaying of button image may be executed on the basis of commands by the upper controller 53.

The text data read from the buffer 63 is processed by a text-ST composition block in a predetermined manner to be supplied to the switch circuit 75.

In the above-mentioned example, each component of the reproducing apparatus 1 is configured by hardware. However, it is also practicable to realize each component of the reproducing apparatus 1 by the software processing on the reproducing apparatus 1. In the software approach, the reproducing apparatus 1 can be operated on a computer apparatus. It is also practicable to realize the reproducing apparatus 1 by a hybrid configuration of hardware and software. For example, those components, such as the first video decoder 69 and the second video decoder 72, for example, higher in processing load than others may be configured by hardware, while other components may be configured by software.

Programs necessary for configuring the reproducing apparatus 1 by software or both software and hardware and executing the reproducing apparatus 1 on a computer apparatus are recorded to recording media, such as a CD-ROM (Compact Disc-Read Only Memory) and a DVD-ROM (Digital Versatile Disc Read Only Memory), and supplied in these recording media. Loading these recording media on a drive of the computer apparatus and installing the programs from the loaded recording media into the computer apparatus in a predetermined manner allow the above-described processing operations to be ready for execution on the computer apparatus. It is also practicable to record the above-mentioned programs to BD-ROMs. It should be noted that the configuration of the computer apparatus is well known, so that the description thereof will be omitted.

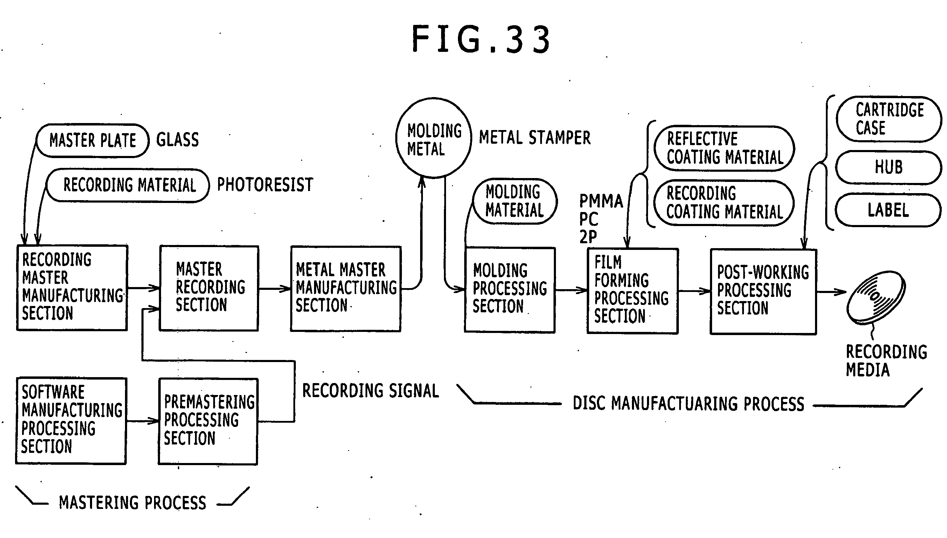

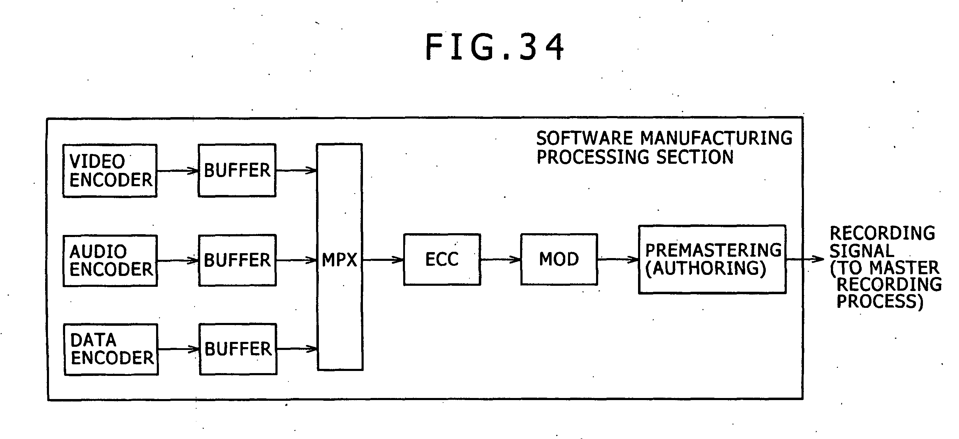

The following describes an exemplary manufacturing method of manufacturing discs that are reproducible on the reproducing apparatus 1, with reference to FIGS. 33 and 34. As shown in FIG. 33 for example, a master disc made of glass for example is prepared and a recording material composed of a photoresist for example is coated on the disc, resulting in a recording master mask.

Next, as shown in FIG. 34, in a software production processing section, the video data encoded by an encoder (a video encoder) and reproducible on the reproducing apparatus 1 is temporarily stored in a buffer and the audio data encoded by an audio encoder is temporarily stored in a buffer. In addition, presentation graphics data and interactive graphics data are encoded in a predetermined manner to be temporarily stored in a buffer. Further, the data (index, play list, and play item, for example) other than streams, encoded by a data encoder, are temporarily stored in a buffer.

It should be noted that non-stream data, such as index, play list, and play item, and data, such as ICS, PDS, and ODS that make up an interactive graphics stream, are created and edited by referencing the information of video data and audio data, for example, on a computer apparatus, not shown, the resultant data being supplied to the data encoder.

The video data, the audio data, the presentation graphics data, the interactive graphics data, and the non-stream data stored in the buffers are multiplexed with a synchronous signal in a multiplexer (MPX) and the multiplexed data is attached with an error correction code by an error correcting code (ECC) circuit. The resultant data is modulated by a modulator (MOD) in a predetermined manner. The modulated data is temporarily recorded to a magnetic tape, for example, in accordance with a predetermined format. Thus, the software to be recorded to a recording media 21 that is reproducible on the reproducing apparatus 1 is produced.

It should be noted that the software production processing section may be configured by a computer apparatus having a known configuration (not shown), in which the entire operation can be controlled by the CPU as instructed by predetermined programs. These programs are provided as recorded to a recording media, such as a CD-ROM and a DVD-ROM, for example. Loading the recording media storing the programs on the computer apparatus and installing the programs into the computer apparatus can configure the software production processing section on the computer apparatus.

Editing (or premastering) the software obtained as described above generates a signal having a format that allows the recording to optical discs. In response to this recorded signal, a laser beam is modulated to be projected onto the photoresist on the master disc. Consequently, the photoresist on the master disc is exposed in response to the recorded signal.

Next, the resultant master disc is developed to form pits on the master disc. Then, the master disc thus prepared is electrically formed to manufacture a metal master disc to which the pits on the glass master disc are copied. From this metal master disc, a metal stamper is manufactured to provide a molding die.

Material, such as PMMA (acryl) or PC (polycarbonate), is put into this molding by injection for example, the injected material then being solidified. Alternatively, material, such as 2P (ultraviolet cured resin), is coated on the metal stamper to be cured by ultraviolet radiation. Consequently, the pits formed on the metal stamper can be copied to a resin replica.

A reflection film is coated on the replica by evaporation or spattering, for example. Alternatively, the reflection film is coated on the replica by spin coating.

Then, necessary processing is executed on the resultant disc, such as working to correct inner and outer diameters and gluing two discs together. Further, the resultant disc is labeled and hubbed to be inserted into a cartridge. Thus, the disc recorded with data that is reproducible on the reproducing apparatus 1 is completed.

It should be understood by those skilled in the art that various modifications, combinations, sub-combinations and alterations may occur depending on design requirements and other factors insofar as they are within the scope of the appended claims or the equivalents thereof.

## Claims

1. A recording medium having recorded thereon data of a plurality of buttons (406, 408, 409) configuring a group (410) arranged at a same position and selectively executed,
each of said plurality of buttons (406, 408, 409) is one of a button for use in an operator screen for prompting a user for an.operation including a button image shifting between three states of a normal state, a selected state, and an execution state, said plurality of buttons (406, 408, 409) including:
a first button (406); and
a second button (408) and a third button (409) that belong to said group (410) to which said first button (406) belongs, said second button (408) and said third button (409) each including a flag indicative of automatic transition from a selected state to an execution state to execute a command; wherein
said first button (406) including a command for putting at least said second button (408) into a selected state;
said second button (408) including a button enabling command for enabling at least said third button (409) and a first command of changing reproduction positions of said data that is executed next to said button enabling command and does not execute a command written after said first command; and
said third button (409) including a second command that is executed after said first command included at least in said second button (408); wherein
if another button that is included in said group (110) in which a button including said button enabling command is included is enabled, commands included in a button associated with said button enabling command are executed to the last; and
if there is no button in a selected state when said another command included in said button associated with said button enabling command has been executed to the last, another enabled button is put into a selected state.

2. The recording medium according to claim 1, wherein
said operator screen is a popup menu that can be turned on/off in accordance with a user operation and said second command is a command for turning off said popup menu.

3. The recording medium according to claim 1 or 2, wherein
said second button (408) and said third button (409) are hidden buttons that are neither displayed nor put in a selected state by a user operation.

4. The recording medium according to anyone of claims 1 to 3, wherein
said plurality of buttons (406, 408, 409) further include a fourth button (406B) that belongs to said group (410) to which said first button (406) belongs and displays an operated state of said first button (406), and
a button enabling command for enabling said fourth button (406B) is further associated with said first button (406) so as to be executed before a command for putting said second button (408) into a selected state.

5. The recording medium according to anyone of claims 1 to 4, wherein
a button enabling command for enabling said first button (406) is further associated with said third button (409) so as to be executed before said second command.

6. An authoring method of generating a data structure of a plurality of buttons (406, 408, 409) configuring a group (410) arranged at a same position and selectively executed, each of said plurality of buttons (406, 408, 409) is one of a button for use in an operator screen for prompting a user for an operation including a button image shifting between three states of a normal state, a selected state, and an execution state, said plurality of buttons (406, 408, 409) including
a first button (406); and
a second button (408) and a third button (409) that belong to said group (410) to which said first button (406) belongs, said second button (408) and said third button (409) each including a flag indicative of automatic transition from a selected state to an execution state to execute a command; said authoring method comprising the steps of:
- generating
a first button (406); and
a second button (408) and a third button (409) that belong to said group (410) to which said first button (406) belongs, said second button (408) and said third button (409) each including a flag indicative of automatic transition from a selected state to an execution state to execute a command; wherein
said first button (406) including a command for putting at least said second button (408) into a elected state;
said second button (408) including a button enabling command for enabling at least said third button (409) and a first command of changing reproduction positions of said data that is executed next to said button enabling command and does not execute a command written after said first command; and
said third button (409) including a second command that is executed after said first command included at least in said second button (408); wherein
if another button that is included in said group (110) in which a button including said button enabling command is included is enabled, commands included in a button associated with said button enabling command are executed to the last; and
if there is no button in a selected state when said another command included in said button associated with said button enabling command has been executed to the last, another enabled button is put into a selected state; and
- encoding a button generated in said data generating step.

7. The authoring method according to claim 6, wherein
said operator screen is a popup menu that can be turned on/off in accordance with a user operation and said second command is a command for turning off said popup menu.

8. The authoring method according to claim 6 or 7, wherein
said second button (408) and said third button (409) are hidden buttons that are neither displayed nor put in a selected state by a user operation.

9. The authoring method according to anyone of claims 6 to 8, wherein
said plurality of buttons (406, 408, 409) further include a fourth button (406B) that belongs to said group (410) to which said first button (406) belongs and displays an operated state of said first button (406), and
a button enabling command for enabling said fourth button (406B) is further associated with said first button (406) so as to be executed before a command for putting said second button (408) into a selected state.

10. A manufacturing method of manufacturing an optical disc recorded with a data structure of a plurality of buttons (406, 408, 409) configuring a group (410) arranged at a same position and selectively executed, each of said plurality of buttons (406, 408, 409) is one of a button for use in an operator screen for prompting a user for an operation including a button image shifting between three states of a normal state, a selected state, and an execution state, said plurality of buttons (406, 408, 409) including
a first button (406); and
a second button (408) and a third button (409) that belong to said group (410) to which said first button (406) belongs, said second button (408) and said third button (409) each including a flag indicative of automatic transition from a selected state to an execution state to execute a command; said manufacturing method comprising the steps of:
- generating
a first button (406); and
a second button (408) and a third button (409) that belong to said group (410) to which said first button (406) belongs, said second button (408) and said third button (409) each including a flag indicative of automatic transition from a selected state to an execution state to execute a command; wherein
said first button (406) including a command for putting at least said second button (408) into a selected state;
said second button (408) including a button enabling command for enabling at least said third button (409) and a first command of changing reproduction positions of said data that is executed next to said button enabling command and does not execute a command written after said first command; and
said third button (409) including a second command that is executed after said first command included at least in said second button (408); wherein
if another button that is included in said group (110) in which a button including said button enabling command is included is enabled, commands included in a button associated with said button enabling command are executed to the last; and
if there is no button in a selected state when said another command included in said button associated with said button enabling command has been executed to the executable last, another enabled button is put into a selected state;
- encoding a button generated in said data generating step;
- converting encoded button into a recording code to be recorded to said recording medium;
- manufacturing a master disc of said optical disc recorded with said data structure made up of said data and said button converted in said conversion step; and
- copying said optical disc on the basis of said master disc manufactured in said manufacturing step.

## Patentansprüche

1. Aufzeichnungsmedium, auf dem Daten mehrerer Schaltflächen (buttons) (406, 408, 409) aufgezeichnet sind, die eine Gruppe (410) bilden, welche bei der gleichen Position angeordnet sind und welche selektiv ausgeführt werden,
wobei jede der mehreren Schaltflächen (406, 408, 409) eine von einer Schaltfläche zur Verwendung in einem Bedienerbildschirm ist, um einen Benutzer auf einen Betrieb aufmerksam zu machen, der eine Schaltflächenbildverschiebung zwischen drei Zuständen eines Normalzustands, eines ausgewählten Zustands und eines Ausführungszustands aufweist, wobei die mehreren Schaltflächen (406, 408, 409) aufweisen:
eine erste Schaltfläche (406); und
eine zweite Schaltfläche (408) und eine dritte Schaltfläche (409), welche zu der Gruppe (410) gehören, zu welcher die erste Schaltfläche (406) gehört, wobei die zweite Schaltfläche (408) und die dritte Schaltfläche (409) jeweils ein Flag aufweisen, welches einen automatischen Übergang von einem Auswahlzustand zu einem Ausführungszustand zeigt, um einen Befehl auszuführen; wobei
die erste Schaltfläche (406) einen Befehl zum Setzen zumindest der zweiten Schaltfläche (408) in einen Auswahlzustand aufweist;
die zweite Schaltfläche (408) eine Schaltflächenfreigabebefehl aufweist, um zumindest die dritte Schaltfläche (409) freizugeben, und einen ersten Befehl, um Wiedergabepositionen der Daten zu ändern, welche in Anschluss an den Schaltflächenfreigabebefehl ausgeführt werden, und keinen Befehl ausführt, der nach dem ersten Befehl geschrieben wird; und
die dritte Schaltfläche (409) einen zweiten Befehl aufweist, der nach dem ersten Befehl ausgeführt wird, der zumindest in der zweiten Schaltfläche (408) enthalten ist; wobei
wenn eine andere Schaltfläche, welche in der Gruppe (110) enthalten ist, in welcher eine Schaltfläche, welche den Schaltflächenfreigabebefehl aufweist, enthalten ist, freigegeben wird, Befehle, welche in einer Schaltfläche in Verbindung mit dem Schaltflächenfreigabebefehl enthalten sind, am letzten ausgeführt werden; und
wenn es keine Schaltfläche in einem Auswahlzustand gibt, wenn der andere Befehl, der in der Schaltfläche in Verbindung mit dem Schaltflächenfreigabebefehl enthalten ist, am letzten ausgeführt wurde, eine andere freigegebene Schaltfläche in einen Auswahlzustand gesetzt wird.

2. Aufzeichnungsmedium nach Anspruch 1, wobei
der Bedienerbildschirm ein Popup-Menü ist, welches gemäß einer Benutzerbetätigung eingeschaltet/ausgeschaltet werden kann, und der zweite Befehl ein Befehl ist, um das Popup-Menü auszuschalten.

3. Aufzeichnungsmedium nach Anspruch 1 oder 2, wobei
die zweite Schaltfläche (408) und die dritte Schaltfläche (409) verborgene Schaltflächen sind, welche weder angezeigt werden noch in einen Auswahlzustand durch eine Benutzerbetätigung gesetzt werden.

4. Aufzeichnungsmedium nach einem der Ansprüche 1 bis 3, wobei
die mehreren Schaltflächen (406, 408, 409) außerdem eine vierte Schaltfläche (406B) aufweisen, welche zu der Gruppe (410) gehört, zu welcher die erste Schaltfläche (406) gehört, und einen Betätigungszustand der ersten Schaltfläche (406) anzeigt, und
ein Schaltflächenfreigabebefehl zum Freigeben der vierten Schaltflächen (406B) außerdem in Verbindung steht mit der ersten Schaltfläche (406), um somit vor einem Befehl ausgeführt zu werden, um die zweite Schaltfläche (408) in einen Auswahlzustand zu setzen.

5. Aufzeichnungsmedium nach einem der Ansprüche 1 bis 4, wobei
der Schaltflächenfreigabebefehl zum Freigeben der ersten Schaltfläche (406) außerdem in Verbindung mit der dritten Schaltfläche (409) steht, um somit vor dem zweiten Befehl ausgeführt zu werden.

6. Berechtigungsverfahren zum Erzeugen einer Datenstruktur mehrerer Schaltflächen (406, 408, 409), die eine Gruppe (410) bilden, welche an einer gleichen Position angeordnet sind und welche selektiv ausgeführt werden, wobei jede der mehreren Schaltflächen (406, 408, 409) eine von einer Schaltfläche zur Verwendung bei einem Bedienerbildschirm ist, um einen Benutzer auf eine Betätigung aufmerksam zu machen, die eine Schaltflächenbildverschiebung zwischen drei Zuständen aus einem Normalzustand, einem Auswahlzustand und einem Ausführungszustand umfasst, wobei die mehreren Schaltflächen (406, 408, 409) umfassen
eine erste Schaltfläche (406); und
eine zweite Schaltfläche (408) und eine dritte Schaltfläche (409), welche zu der Gruppe (410) gehören, zu welcher die erste Schaltfläche (406) gehört, wobei die zweite Schaltfläche (408) und die dritte Schaltfläche (409) jeweils ein Flag aufweisen, welches einen automatischen Übergang von einem Auswahlzustand zu einem Ausführungszustand zeigt, um einen Befehl auszuführen; wobei das Berechtigungsverfahren folgende Schritte umfasst:
- Erzeugen
einer ersten Schaltfläche (406); und
einer zweiten Schaltfläche (408) und einer dritten Schaltfläche (409), welche zu der Gruppe (410) gehören, zu welcher die erste Schaltfläche (406) gehört, wobei die zweite Schaltfläche (408) und die dritte Schaltfläche (409) jeweils ein Flag aufweisen, welches einen automatischen Übergang von einem Auswahlzustand zu einem Ausführungszustand zeigt, um einen Befehl auszuführen; wobei
die erste Schaltfläche (406) einen Befehl ausweist, um zumindest die zweite Schaltfläche (408) in einen Auswahlzustand zu setzen;
die zweite Schaltfläche (408) einen Schaltflächenfreigabebefehl aufweist, um zumindest die dritte Schaltfläche (409) freizugeben, und einen ersten Befehl zum Ändern von Wiedergabepositionen der Daten, welcher im Anschluss an den Schaltflächenfreigabebefehl ausgeführt wird, und keinen Befehl ausführt, der nach dem ersten Befehl geschrieben wird; und
die dritte Schaltfläche (409) einen zweiten Befehl aufweist, der nach dem ersten Befehl ausgeführt wird, der bei zumindest der zweiten Schaltfläche (408) enthalten ist; wobei
wenn eine andere Schaltfläche, welche in der Gruppe (410) enthalten ist, in welcher eine Schaltfläche, welche den Schaltflächenfreigabebefehl aufweist, enthalten ist, freigegeben wird, Befehle, welche in einer Schaltfläche in Verbindung mit dem Schaltflächenfreigabebefehl enthalten sind, am letzten ausgeführt werden; und
wenn es keine Schaltfläche in einem Auswahlzustand gibt, wenn der andere Befehl, der in der Schaltfläche in Verbindung mit dem Schaltflächenfreigabebefehl enthalten ist, am letzten ausgeführt wird, eine andere freigegebene Schaltfläche in einen Auswahlzustand gesetzt wird; und
- Codieren einer Schaltfläche, welche im Datenerzeugungsschritt erzeugt wird.

7. Berechtigungsverfahren nach Anspruch 6, wobei
der Bedienerbildschirm ein Popup-Menü ist, welches gemäß einer Benutzerbetätigung eingeschaltet/ausgeschaltet werden kann, und der zweite Befehl ein Befehl ist, um das Popup-Menü auszuschalten.

8. Berechtigungsverfahren nach Anspruch 6 oder 7, wobei
die zweite Schaltfläche (408) und die dritte Schaltfläche (409) verborgene Schaltflächen sind, welche weder angezeigt werden noch in einen Auswahlzustand durch eine Benutzerbetätigung gesetzt werden.

9. Berechtigungsverfahren nach einem der Ansprüche 6 bis 8, wobei
die mehreren Schaltflächen (406, 408, 409) außerdem eine vierte Schaltfläche (406B) aufweisen, welche zu der Gruppe (410) gehört, zu welcher die erste Schaltfläche (406) gehört, und einen Betätigungszustand der ersten Schaltfläche (406) anzeigt, und
ein Schaltflächenfreigabebefehl zum Freigeben der vierten Schaltfläche (406B) außerdem in Verbindung steht mit der ersten Schaltfläche (406), um somit vor einem Befehl ausgeführt zu werden, um die zweite Schaltfläche (408) in einen Auswahlzustand zu setzen.

10. Herstellungsverfahren zum Herstellen einer optischen Platte, welche mit einer Datenstruktur mehrere Schaltflächen (406, 408, 409) beschrieben ist, welche eine Gruppe (410) bilden, welche bei einer gleichen Position angeordnet ist und welche selektiv ausgeführt werden, wobei jede der mehreren Schaltflächen (406, 408, 409) eine von einer Schaltfläche zur Verwendung bei einem Bedienerbildschirm ist, um einen Benutzer auf einen Betrieb einschließlich einer Schaltflächenbildverschiebung zwischen drei Zuständen aus einem Normalzustand, einem Auswahlzustand und einem Ausführungszustand aufmerksam zu machen, wobei die mehreren Schaltflächen (406, 408, 409) umfassen:
eine erste Schaltfläche (406); und
eine zweite Schaltfläche (408) und eine dritte Schaltfläche (409), welche zu der Gruppe (410) gehören, zu welcher die erste Schaltfläche (406) gehört, wobei die zweite Schaltfläche (408) und die dritte Schaltfläche (409) jeweils ein Flag aufweisen, welches einen automatischen Übergang von einem Auswahlzustand zu einem Ausführungszustand zeigt, um einen Befehl auszuführen; wobei das Herstellungsverfahren folgende Schritte umfasst:
- Erzeugen
einer ersten Schaltfläche (406); und
einer zweiten Schaltfläche (408) und einer dritten Schaltfläche (409), welche zu der Gruppe (410) gehören, zu welcher die erste Schaltfläche (406) gehört, wobei die zweite Schaltfläche (408) und die dritte Schaltfläche (409) jeweils ein Flag aufweisen, welches einen automatischen Übergang von einem Auswahlzustand zu einem Ausführungszustand zeigt, um einen Befehl auszuführen; wobei
die erste Schaltfläche (406) einen Befehl ausweist, um zumindest die zweite Schaltfläche (408) in einen Auswahlzustand zu setzen;
die zweite Schaltfläche (408) einen Schaltflächenfreigabebefehl aufweist, um zumindest die dritte Schältfläche (409) freizugeben, und einen ersten Befehl zum Ändern von Wiedergabepositionen der Daten, welche im Anschluss an den Schaltflächenfreigabebefehl ausgeführt werden, und keinen Befehl ausführt, der nach dem ersten Befehl geschrieben wird; und
die dritte Schaltfläche (409) einen zweiten Befehl aufweist, der nach dem ersten Befehl ausgeführt wird, der bei zumindest der zweiten Schaltfläche (408) enthalten ist; wobei
wenn eine andere Schaltfläche, welche in der Gruppe (410) enthalten ist, in welcher eine Schaltfläche, welche den Schaltflächenfreigabebefehl aufweist, enthalten ist, freigegeben wird, Befehle, welche in einer Schaltfläche in Verbindung mit dem Schaltflächenfreigabebefehl enthalten sind, am letzten ausgeführt werden; und
wenn es keine Schaltfläche in einem Auswahlzustand gibt, wenn der andere Befehl, der in der Schaltfläche in Verbindung mit dem Schaltflächenfreigabebefehl enthalten ist, am letzten ausgeführt wird, eine andere freigegebene Schaltfläche in einen Auswahlzustand gesetzt wird;
- Codieren einer Schaltfläche, welche im Datenerzeugungsschritt erzeugt wird;
- Umsetzen der codierten Schaltfläche in einen Aufzeichnungscode, der auf dem Aufzeichnungsmedium aufzuzeichnen ist;
- Herstellen einer Masterplatte der optischen Platte, die mit der Datenstruktur beschrieben ist, welche aus den Daten und der Schaltfläche hergestellt ist, welche im Umsetzungsschritt umgesetzt wurden; und
- Kopieren der optischen Platte auf Basis der Masterplatte, welche im Herstellungsschritt hergestellt wurde.

## Revendications

1. Support d'enregistrement ayant enregistré sur ce dernier des données d'une pluralité de boutons (406, 408, 409) configurant un groupe (410) agencé dans la même position et sélectivement exécuté,
chacun de ladite pluralité de boutons (406, 408, 409) est l'un parmi un bouton destiné à être utilisé sur un écran d'opérateur pour inciter un utilisateur à réaliser une opération comprenant un repositionnement d'image de bouton entre trois états parmi un état normal, un état sélectionné et un état d'exécution, ladite pluralité de boutons (406, 408, 409) comprenant :
un premier bouton (406) ; et
un deuxième bouton (408) et un troisième bouton (409) qui appartiennent audit groupe (410) auquel ledit premier bouton (406) appartient, ledit deuxième bouton (408) et ledit troisième bouton (409) comprenant chacun un drapeau indiquant la transition automatique d'un état sélectionné à un état d'exécution pour exécuter une commande ; dans lequel :
ledit premier bouton (406) comprenant une commande pour placer au moins ledit deuxième bouton (408) dans un état sélectionné ;
ledit deuxième bouton (408) comprenant une commande d'activation de bouton pour activer au moins ledit troisième bouton (409) et une première commande consistant à changer les positions de reproduction desdites données qui est exécutée après ladite commande d'activation de bouton et n'exécute pas une commande écrite après ladite première commande ; et
ledit troisième bouton (409) comprenant une deuxième commande qui est exécutée après ladite première commande comprise au moins dans ledit deuxième bouton (408) ; dans lequel :
si un autre bouton qui est inclus dans ledit groupe (110) dans lequel un bouton comprenant ladite commande d'activation de bouton est compris, est activé, les commandes comprises dans un bouton associé à ladite commande d'activation de bouton sont exécutées jusqu'au bout ; et
s'il n'y a pas de bouton dans un état sélectionné lorsque ladite autre commande comprise dans ledit bouton associé à ladite commande d'activation de bouton a été exécutée jusqu'au bout, un autre bouton activé est placé dans un état sélectionné.

2. Support d'enregistrement selon la revendication 1, dans lequel ledit écran d'opérateur est un menu contextuel qui peut être mis en marche/arrêt selon une opération d'utilisateur et ladite deuxième commande est une commande pour arrêter ledit menu contextuel.

3. Support d'enregistrement selon la revendication 1 ou 2, dans lequel ledit deuxième bouton (408) et ledit troisième bouton (409) sont des boutons cachés qui ne sont ni affichés, ni placés dans un état sélectionné par une opération de l'utilisateur.

4. Support d'enregistrement selon l'une quelconque des revendications 1 à 3, dans lequel :
ladite pluralité de boutons (406, 408, 409) comprend en outre un quatrième bouton (406B) qui appartient audit groupe (410) auquel ledit premier bouton (406) appartient et affiche un état activé dudit premier bouton (406), et
une commande d'activation de bouton pour activer ledit quatrième bouton (406B) est en outre associée audit premier bouton (406) afin d'être exécutée avant une commande pour placer ledit deuxième bouton (408) dans un état sélectionné.

5. Support d'enregistrement selon l'une quelconque des revendications 1 à 4, dans lequel une commande d'activation de bouton pour activer ledit premier bouton (406) est en outre associée audit troisième bouton (409) afin d'être exécutée avant ladite deuxième commande.

6. Procédé de création pour générer une structure de données d'une pluralité de boutons (406, 408, 409) configurant un groupe (410) agencé dans la même position et sélectivement exécuté, chacun de ladite pluralité de boutons (406, 408, 409) est l'un parmi un bouton destiné à être utilisé dans un écran d'opérateur pour inciter un utilisateur à réaliser une opération comprenant un repositionnement d'image de bouton entre trois états parmi un état normal, un état sélectionné et un état d'exécution, ladite pluralité de boutons (406, 408, 409) comprenant :
un premier bouton (406) ; et
un deuxième bouton (408) et un troisième bouton (409) qui appartiennent audit groupe (410) auquel ledit premier bouton (406) appartient, ledit deuxième bouton (408) et ledit troisième bouton (409) comprenant chacun un drapeau indiquant une transition automatique d'un état sélectionné à un état d'exécution pour exécuter une commande ; ledit procédé de création comprenant les étapes consistant à :
générer :
un premier bouton (406) ; et
un deuxième bouton (408) et un troisième bouton (409) qui appartiennent audit groupe (410) auquel ledit premier bouton (406) appartient, ledit deuxième bouton (408) et ledit troisième bouton (409) comprenant chacun un drapeau indiquant la transition automatique d'un état sélectionné à un état d'exécution pour exécuter une commande ; dans lequel :
ledit premier bouton (406) comprenant une commande pour placer au moins ledit deuxième bouton (408) dans un état sélectionné ;
ledit deuxième bouton (408) comprenant une commande d'activation de bouton pour activer au moins ledit troisième bouton (409) et une première commande pour changer les positions de reproduction desdites données qui est exécutée après ladite commande d'activation de bouton et n'exécute pas une commande écrite après ladite première commande ; et
ledit troisième bouton (409) comprenant une deuxième commande qui est exécutée après ladite première commande comprise dans au moins ledit deuxième bouton (408) ; dans lequel :
si un autre bouton qui est compris dans ledit groupe (110) dans lequel un bouton comprenant ladite commande d'activation de bouton est compris, est activé, les commandes comprises dans un bouton associé à ladite commande d'activation de bouton sont exécutées jusqu'au bout ; et
s'il n'y a pas de bouton dans un état sélectionné lorsque ladite autre commande comprise dans ledit bouton associé à ladite commande d'activation de bouton a été exécutée jusqu'au bout, un autre bouton activé est placé dans un état sélectionné ; et
encoder un bouton généré dans ladite étape de génération de données.

7. Procédé de création selon la revendication 6, dans lequel ledit écran d'opérateur est un menu contextuel qui peut être mis en marche/arrêté selon une opération de l'utilisateur et ladite deuxième commande est une commande pour arrêter ledit menu contextuel.

8. Procédé de création selon la revendication 6 ou 7, dans lequel ledit deuxième bouton (408) et ledit troisième bouton (409) sont des boutons cachés qui ne sont ni affichés ni placés dans un état sélectionné par une opération de l'utilisateur.

9. Support d'enregistrement selon l'une quelconque des revendications 6 à 8, dans lequel :
ladite pluralité de boutons (406, 408, 409) comprend en outre un quatrième bouton (406B) qui appartient audit groupe (410) auquel ledit premier bouton (406) appartient et affiche un état actionné dudit premier bouton (406), et
une commande d'activation de bouton pour activer ledit quatrième bouton (406B) est en outre associée audit premier bouton (406) afin d'être exécutée avant une commande pour placer ledit deuxième bouton (408) dans un état sélectionné.

10. Procédé de fabrication pour fabriquer un disque optique enregistré avec une structure de données d'une pluralité de boutons (406, 408, 409) configurant un groupe (410) agencé dans une même position et exécuté de manière sélective, chacun de ladite pluralité de boutons (406, 408, 409) est l'un parmi un bouton destiné à être utilisé sur un écran d'opérateur pour inciter un utilisateur à réaliser une opération comprenant un repositionnement d'image de bouton, entre trois états parmi un état normal, un état sélectionné et un état d'exécution, ladite pluralité de boutons (406, 408, 409) comprenant :
un premier bouton (406) ; et
un deuxième bouton (408) et un troisième bouton (409) qui appartiennent audit groupe (410) auquel ledit premier bouton (406) appartient, ledit deuxième bouton (408) et ledit troisième bouton (409) comprenant chacun un drapeau indiquant la transition automatique d'un état sélectionné à un état d'exécution pour exécuter une commande ; ledit procédé de fabrication comprenant les étapes consistant à :
générer :
un premier bouton (406) ; et
un deuxième bouton (408) et un troisième bouton (409) qui appartiennent audit groupe (410) auquel ledit premier bouton (406) appartient, ledit deuxième bouton (408) et ledit troisième bouton (409) comprenant chacun un drapeau indiquant la transition automatique d'un état sélectionné à un état d'exécution pour exécuter une commande ; dans lequel :
ledit premier bouton (406) comprenant une commande pour placer au moins ledit deuxième bouton (408) dans un état sélectionné ;
ledit deuxième bouton (408) comprenant une commande d'activation de bouton pour activer au moins ledit troisième bouton (409) et une première commande pour changer les positions de reproduction desdites données qui est exécutée après ladite commande d'activation de bouton et n'exécute pas une commande écrite après ladite première commande ; et
ledit troisième bouton (409) comprenant une deuxième commande qui est exécutée après ladite première commande comprise au moins dans ledit deuxième bouton (408) ; dans lequel :
si un autre bouton qui est compris dans ledit groupe (110) dans lequel un bouton comprenant ladite commande d'activation de bouton est compris, est activé, les commandes comprises dans un bouton associé à ladite commande d'activation de bouton sont exécutées jusqu'à la fin ; et
s'il n'y a pas de bouton dans un état sélectionné lorsque ladite autre commande comprise dans ledit bouton associé à ladite commande d'activation de bouton a été exécutée jusqu'à la fin, un autre bouton activé est placé dans un état sélectionné ;
encoder un bouton généré dans ladite étape de génération de données ;
convertir le bouton encodé en un code d'enregistrement destiné à être enregistré sur ledit support d'enregistrement ;
fabriquer un disque maître dudit disque optique enregistré avec ladite structure de données composée desdites données et dudit bouton converti lors de ladite étape de conversion ; et
copier ledit disque optique en fonction dudit disque maître fabriqué lors de ladite étape de fabrication.
